(19) Europäisches Patentamt
European Patent Office
Office européen des brevets

(11) EP 2 691 428 B1

(12) EUROPÄISCHE PATENTSCHRIFT

(45) Veröffentlichungstag und Bekanntmachung des Hinweises auf die Patenterteilung:
**16.01.2019 Patentblatt 2019/03**

(21) Anmeldenummer: **12709650.1**

(22) Anmeldetag: **22.03.2012**

(51) Int Cl.:
***C08F 265/02*** (2006.01) ***C08F 265/06*** (2006.01)
***C08F 265/10*** (2006.01) ***C09D 151/00*** (2006.01)
***B27K 3/15*** (2006.01) ***C08F 2/22*** (2006.01)

(86) Internationale Anmeldenummer:
**PCT/EP2012/055068**

(87) Internationale Veröffentlichungsnummer:
**WO 2012/130712 (04.10.2012 Gazette 2012/40)**

(54) **VERFAHREN ZUR HERSTELLUNG VON MEHRSTUFIGEN WÄSSRIGEN POLYMERISATDISPERSIONEN UND DEREN VERWENDUNG ALS BINDEMITTEL FÜR DIE BESCHICHTUNG VON UNTERGRÜNDEN**

PROCESS FOR PREPARATION OF AQUEOUS MULTISTAGE POLYMER DISPERSION AND USE THEREOF AS BINDER FOR COATING SUBSTRATES

PROCÉDÉ DE PRÉPARATION D´UNE DISPERSION AQUEUSE MULTI-ÉTAPE DE POLYMÉRISAT ET SON UTILISATION COMME LIANT POUR LE REVÊTEMENT DE SUPPORTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2011 EP 11160443**

(43) Veröffentlichungstag der Anmeldung:
**05.02.2014 Patentblatt 2014/06**

(73) Patentinhaber: **BASF SE**
**67056 Ludwigshafen am Rhein (DE)**

(72) Erfinder:
- **BALK, Roelof**
  **67459 Böhl-Iggelheim (DE)**
- **TUCHBREITER, Arno**
  **28210 Charlotte (US)**
- **LOHMEIJER, Bas**
  **68199 Mannheim (DE)**

(74) Vertreter: **BASF IP Association**
**BASF SE**
**G-FLP-C006**
**67056 Ludwigshafen (DE)**

(56) Entgegenhaltungen:
**EP-A1- 1 167 477**
**WO-A2-2011/009838**
**AT-B- 402 504**
**DE-A1- 4 439 459**
**US-A- 5 962 571**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 691 428 B1

## Beschreibung

Gegenstand der vorliegenden Erfindung ist ein Verfahren zur Herstellung von mehrstufigen wässrigen Polymerisatdispersionen, die bei niedrigen Temperaturen filmbildend sind, eine gute Blockfestigkeit in einer Formulierung, auch bei erhöhten Temperaturen, aufweisen, eine geringe Schaumneigung zeigen, sowie eine gute Naßhaftung und Lagerstabilität besitzen, sowie die Verwendung der so hergestellten wässrigen Polymerisatdispersionen als Bindemittel für die Beschichtung von Untergründen.

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der mittlere Durchmesser der Polymerisatpartikel liegt häufig im Bereich von 10 bis 1000 nm, insbesondere im Bereich von 30 bis 300 nm. Wässrige Polymerisatdispersionen werden in einer Vielzahl von technischen Anwendungen als Bindemittel eingesetzt.

Werden sie als Bindemittel für Beschichtungen von Untergründen eingesetzt ist eine der wichtigen Anforderungen für solche Beschichtungen, dass sie eine hohe Härte besitzen und damit eine gute Kratz- und Blockfestigkeit aufweisen. Aus ökologischen Gründen wird eine Verfilmung des Bindemittels im Bereich von < 0 bis 40°C angestrebt, so dass keine oder nur geringe Mengen eines Filmbildehilfsmittels benötigt werden. Eine andere Anforderung ist eine hohe Feinteiligkeit. Dieses ermöglicht die Herstellung von transparenten wässrigen Lasuren und ein gutes Eindringen der Lasur in den Untergrund, insbesondere wenn das zu beschichtende Substrat Holz ist.

Aus EP-B 0 710 680 ist bekannt, dass man durch mehrstufige Emulsionspolymerisation, Polymerisatdispersionen herstellen kann, die eine niedrige Mindestfilmbildetemperatur (MFT) aufweisen und Filme mit hoher Blockfestigkeit bilden. Solche Polymerisatdispersionen haben einen mittleren Polymerisatpartikeldurchmesser von < 100 nm. Die Feinteiligkeit reicht allerdings in den meisten Fällen nicht aus, um damit im nassen Zustand gewünschte transparente Lasuren für Holzbeschichtungen zu formulieren. Holzlasuren bilden im trockenen Zustand transparente oder semitransparente Holzbeschichtungen. Sie enthalten transparente Pigmente (z.B. transparentes, ultrafeines Eisenoxid) in so geringer Menge, dass man die Struktur des Holzes noch erkennen kann.

Soll die Teilchengröße der mittels der radikalisch initiierten wässrigen Emulsionspolymerisation herzustellenden Polymerisatteilchen gezielt eingestellt werden, so wird in der Regel eine sogenannte Polymersaat eingesetzt, welche entweder vorher mit anderen Monomeren separat hergestellt wurde (Polymerfremdsaat) oder welche durch Teilpolymerisation der zu polymerisierenden Monomere "in situ" erzeugt wurde. Insbesondere bei der Herstellung von feinteiligen Polymerisatdispersionen verwendet man bevorzugt diese "in situ" Polymersaat.

Die Herstellung einer wässrigen Polymerisatdispersion unter Verwendung einer "in situ" Polymersaat ist dem Fachmann geläufig (siehe beispielsweise DE-A 196 09 509, EP-A 690882, EP-A 710 680, EP-A 1 125 949, EP-A 1 294 816, EP-A 1 614 732, WO-A 03/29300) und erfolgt in der Regel dergestalt, dass vorab der eigentlichen Emulsionspolymerisation eine kleine Teilmenge eines der zur Emulsionspolymerisation eingesetzten Monomeren oder des zur Emulsionspolymerisation eingesetzten Monomerengemisches im wässrigen Polymerisationsmedium vorgelegt und in Anwesenheit einer größeren Emulgatormenge radikalisch polymerisiert wird. Falls insbesondere feinteilige Polymerisatdispersionen benötigt sind, braucht man eine besonders große Emulgatormenge. Die dadurch sehr emulgatorreichen Polymerisatdispersionen neigen zu starker Schaumbildung.

Die AT402504 offenbart ein Verfahren zur Herstellung von wäßrigen selbstvernetzenden Copolymerdispersionen, deren Monomerzusammensetzung als wesentliche Komponenten Acetoacetyl-haltige (Meth) acrylatmonomere und alpha, beta-ethylenisch ungesättigte Carbonsäuren, die Acetoacetyl- und Carboxylgruppen enthält. Acrylatcopolymere, die mittels einer speziellen zweistufigen radikalischen Emulsionspolymerisation erhalten werden, werden mit Polyaminen neutralisiert, die letztlich als Vernetzungskomponente wirken. Mit solchen Bindemitteln lassen sich lagerstabile Einkomponenten-Beschichtungsstoffe formulieren, die bei Umgebungs- oder erhöhter Temperatur vernetzen.

Die WO2011/009838 offenbart wässrige Polymerisatdispersionen erhältlich durch zuerst die Herstellung einer "in situ" Saat, enthaltend hydrophile und hydrophobe Monomere, indem in einem wässrigen Polymerisationsmedium zuerst lediglich

0,1 bis 10 Gew.-% der Gesamtmenge des wenigstens einen Monomeren A und / oder B sowie

0,1 bis 10 Gew.-% eines hydrophilen Monomers mit der allgemeinen Formel

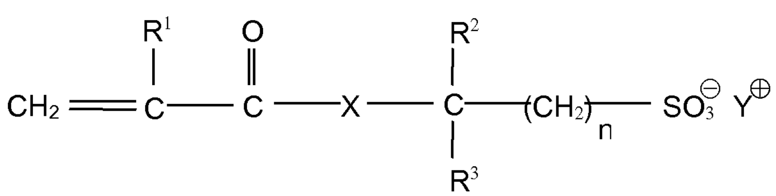

in der die Variablen folgende Bedeutung haben:

n = 0 bis 2
$R^1$, $R^2$, $R^3$ = unabhängig von einander Wasserstoff oder eine Mehtylgruppe
X = Sauerstoff oder die Iminogruppe (NH), und
Y = Wasserstoff, Alkalimetall oder Ammonium

vorgelegt (Monomerzusammensetzung I), und in Gegenwart von mindestens einem Emulgator und einem Radikalinitiator polymerisiert werden (Polymerisationsstufe 1), worauf ein Copolymerisat mit einer Monomerzusammensetzung II (Polymerisationsstufe 2) und in einer dritten Polymerisationsstufe ein Copolymerisat mit einer Monomerzusammensetzung III polymerisiert wird.

US 5,962,571 offenbart ein Verfahren zur Herstellung einer organischen lösungsmittelfreien wässrigen vernetzbaren Polymerzusammensetzung, umfassend: a) Herstellen einer wässrigen Lösung eines säurefunktionellen Oligomers mit einer Tg von 10 bis 125 ° C und mit funktionellen Vernetzungsmittelgruppen; b) Durchführen einer wässrigen Emulsionspolymerisation zur Herstellung einer wässrigen Emulsion eines olefinischen hydrophoben Polymers in Gegenwart der wässrigen Oligomerlösung, wobei das hydrophobe Polymer eine Tg von mindestens 25 ° C unterhalb des Oligomers und gegebenenfalls der vernetzenden funktionellen Gruppen aufweist und c) kombiniert mit einem Vernetzungsmittel, das mit den Vernetzergruppen des Oligomers und Polymers umsetzbar ist.

Die EP 1 167 477 offenbart eine Harzzusammensetzung für wässrige Anstrichmittel, enthaltend ein Bindemittel, dass durch eine mehrstufige Emulsionspolymerisation mit einer weichen äußeren Phase und einem harten Kern erhalten wird.

Keines der beiden letztgenannten Dokumente offenbart eine inverte Kern-Schale-Poymerisation, mit der man Polymerteilchen mit einer harten Schale und einem weichen Kern erhält und wobei die Schale zwingend eine Vernetzerkomponente enthält.

Eine elegante Art Emulgator während Herstellung und Verarbeitung, unter beibehalten der Stabilität einzusparen, ist die Herstellung von 'inverten' Kern-Schale Polymerisaten. Solche sind schon beschrieben in der EP 338486, und darin genannten Literaturstellen. Hierbei wird zuerst eine carboxylreiche Monomerzusammenstellung mittels eines 'konventionellen' Emulsionspolymerisationsprozesses polymerisiert, oft in Gegenwart einer geringen Emulgatormenge und einem Kettenlängeregler, welche nach einem 'Quellschritt' mit Lauge (US 5,081,166) oder kompletter Neutralisation der Carboxylgruppen und Auflösung der Polymerteilchen (EP 758347) als Stabilisator für die nächsten Polymerisationsschritte fungiert (siehe auch EP 989163, EP 1978044, US 2008/0058473-A1). In der Regel werden für solche Polymerisate in der erste Monomerzusammenstellung ziemlich hohe Mengen Carboxylgruppen tragender Monomere oder Monomere mit latenter Carboxylfunktionalität eingesetzt. In WO 05/121595 werden beispielsweise 10 - 70 Gew.-% latente carboxylfunktionale Monomere in der ersten Polymerstufe eingesetzt, bezogen auf 100 Gew.-% der 1. Stufe. Wenn man solche Polymerisate als Bindemittel in wässrigen Formulierungen einsetzt, die oft mit Verdickern, insbesondere mit Acrylatverdickern auf pH > 8 eingestellt werden um das erwünschte Fließverhalten der Formulierungen zu erzeugen, führt eine solche hohe Carboxylfunktionalität zu Instabilität solcher Formulierungen bei deren Lagerung, die sich in einer unkontrollierten Steigung der Viskosität oder Sedimentbildung äußert.

Aufgabe der vorliegenden Erfindung war es, ein Verfahren zur Herstellung von stabilen Polymerdispersionen mit wenig Emulgator für Beschichtungsmassen bereitzustellen, die schon bei niedrigen Temperaturen eine sehr gute Filmbildung zeigen aber trotzdem Filme mit hoher Härte und ausgezeichneter Blockresistenz erzeugen und die sich außerdem durch eine gute Naßhaftung und Lagerstabilität auszeichnen.

Die Aufgabe wurde gelöst durch eine Verfahren zur Herstellung von Polymerdispersionen, erhältlich durch mindestens zweistufige Emulsionspolymerisation

- wobei zunächst in einer ersten Stufe in wässrigem Medium durch radikalische Emulsionspolymerisation ein in Wasser dispergiertes erstes Polymerisat mit einer Glasübergangstemperatur gößer 50 °C und einem gewichtsmittleren Molekulargewicht zwischen 5 und 100 kDa hergestellt wird aus einer ersten Zusammensetzung, enthaltend hydrophile und hydrophobe Monomere,
  enthaltend

  (A1) mindestens einen (Meth)acrylsäurealkylester,
  (B1) optional mindestens einen Vinylaromaten mit bis zu 20 C-Atomen,
  (C1) optional mindestens eine radikalisch polymerisierbare Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
  (D1) mindestens einer $\alpha,\beta$-ethylenisch ungesättigten Carbonsäure, oder ein Vinylmonomer mit latenten ionischen

Gruppen,

(E1) optional mindestens einem Vernetzer,

(F1) mindestens einer Verbindung ausgewählt aus der Gruppe bestehend aus 2-Ureido(meth)acrylat, wie (Meth)acryl-säure 2-(2-oxo-imidazolidin-1-yl)-ethyl ester, 2-Ureido(meth)acrylat, Acetoacetoxyethyl acrylat, Acetoacetoxypropyl methacrylat, Acetoacetoxybutyl methacrylat, 2-(Aceto-acetoxy) ethyl methacrylat, Diacetonacrylamid (DAAM) und Diacetonmethacrylamid,

(G1) optional mindestens einer Verbindung mit einer (Meth)acrylat- und einer Epoxygruppe und

(H1) optional mindestens einem $\alpha,\beta$-ethylenisch ungesättigten Carbonsäureamid,

in Gegenwart mindestens eines Initiators, 0,1 bis 3,5 Gew.-% eines Emulgators bezogen auf die Gesamtmenge der in allen Stufen in die radikalische Polymerisation eindosierten radikalisch polymerisierbaren Monomere, sowie mindestens eines Kettenlängereglers,

- Neutralisation bis zu einem pH-Wert von mindestens 4,5 bevorzugt größer 5,5, der so gebildeten Partikel mit einer Base (Neutralisationsmittel)
- gefolgt von einer radikalischen Polymerisation von hydrophoben und hydrophilen Monomeren in einer Folgestufe in Gegenwart des in der ersten Stufe hergestellten Copolymers von

(A2) mindestens einem (Meth)acrylsäurealkylester,

(B2) optional mindestens einem Vinylaromaten mit bis zu 20 C-Atomen,

(C2) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,

(D2) optional mindestens einer $\alpha,\beta$-ethylenisch ungesättigten Carbonsäure, oder ein Vinylmonomer mit latenten ionischen Gruppen,

(E2) optional mindestens einem Vernetzer und

(F2) optional mindestens einer Verbindung ausgewählt aus der Gruppe bestehend aus 2-Ureido(meth)acrylat, wie (Meth)acrylsäure 2-(2-oxo-imidazolidin-1-yl)-ethyl ester, 2-Ureido(meth)acrylat, Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,

(G2) optional mindestens einer Verbindung mit einer (Meth)acrylat- und einer Epoxygruppe und

(H2) optional mindestens einem $\alpha,\beta$-ethylenisch ungesättigten Carbonsäureamid, mit der Maßgabe, dass das Polymer der 2. Stufe hydrophober ist als das der 1. Stufe und die Glasübergangstemperatur der zweiten Stufe mindestens 50 °C niedriger als die der ersten Stufe ist.

Der Ausdruck "hydrophober" bedeutet, dass das Polymer der 2. Stufe signifikant niedrigere Löslichkeitsparameter, wie definiert in Van Krevelen in "Properties of Polymers" (Elsevier Scientific Publishing Company, Amsterdam, 1990), haben muss.

Diese Folgestufe kann sowohl kontinuierlich in Form einer einzigen Monomerzusammenstellung durchgeführt werden, als auch in Stufen mit unterschiedlichen Zusammenstellungen.

Optional kann anschließend mindestens noch ein zusätzliches Vernetzungsmittel zugegeben werden.

Die Menge des mindestens einen Emulgators beträgt 0,1 bis 3,5 Gew% , bezogen auf die Gesamtmenge der in allen Stufen in die radikalische Polymerisation eindosierten radikalisch polymerisierbaren Monomere.

Die eingesetzten Vinylmonomere umfassen Monomere mit funktionalen Gruppen wie vernetzende Gruppen und hydrophile in Wasser dispergierbare Gruppen. Einige funktionale Gruppen können mehr als eine Funktion haben. (Meth)acrylsäure wird beispielsweise normalerweise als Wasser dispergierbares Monomer benutzt, kann hier aber auch als vernetzendes Monomer agieren, und z.B. mit Epoxidverbindungen oder Carbodiimiden reagieren.

Ein weiterer Gegenstand der Erfindung ist eine Beschichtungsmasse enthaltend die erfindungsgemäße Polymerdispersion.

In die Polymerisation können erfindungsgemäß folgende Monomere eingesetzt werden:

(Meth)acrylsäurealkylester (A1) und (A2)

Dies umfaßt bevorzugt solche (Meth)acrylsäurealkylester, deren linearer oder verzweigter Alkylrest 1 bis 20 Kohlenstoffatome aufweist, besonders bevorzugt 1 bis 10, ganz besonders bevorzugt 1 bis 8 und insbesondere 1 bis 4 Kohlenstoffatome.

Zu nennen als Beispiele für (Meth)acrylsäurealkylester sind (Meth)acrylsäuremethylester, (Meth)acrylsäureethylester, (Meth)acrylsäure-n-propylester, (Meth)acrylsäure-n-butylester, (Meth)acrylsäure-*iso*-butylester, (Meth)acryl-

säure-*sek*-butylester, (Meth)acrylsäure-*tert*-butylester, (Meth)acrylsäure-n-pentylester, (Meth)acrylsäure-*iso*-pentylester, (Meth)acrylsäure-2-methyl-butylester, (Meth)acrylsäureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und (Meth)acrylsäure-n-dodecylester.

Bevorzugt sind Methylmethacrylat, Methylacrylat, Ethylacrylat, n-Butylacrylat, n-Butylmethacrylat, n-Hexylacrylat, n-Octylacrylat, 2-Ethylhexylacrylat und 3-Propylheptylacrylat.

Insbesondere sind auch Mischungen der (Meth)acrylsäurealkylester geeignet.

Vinylaromaten mit bis zu 20 C-Atomen (B1) und (B2)

Dabei handelt es sich um optional substituierte aromatische Systeme mit einer Vinylgruppe, die sich in Konjugation zum aromatischen Ringsystem befindet.

Solche substituierten Vinylaromaten weisen eine oder mehrere, bevorzugt eine 1 bis 10 Kohlenstoffatome, bevorzugt 1 bis 6 und besonders bevorzugt 1 bis 4 Kohlenstoffatome aufweisende lineare oder verzweigte Alkylgruppe auf, die sich am Aromaten oder an der Vinylgruppe befinden kann. Befindet sich der Substituent am Aromaten, so kann sich der Substituent bevorzugt in ortho- oder para-Position, besonders bevorzugt in para-Position zur Vinylgruppe befinden.

Als vinylaromatische Verbindungen kommen Vinyltoluol, Vinylnaphthalin, $\alpha$- und p-Methylstyrol, $\alpha$-Butylstyrol, 4-n-Butylstyrol, 4-n-Decylstyrol und vorzugsweise Styrol und $\alpha$-Methylstyrol in Betracht.

Radikalisch polymerisierbaren Verbindung (C1) und (C2)

Die Verbindungen (C1) und (C2) sind ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen, bevorzugt ausgewählt aus der Gruppe bestehend aus ethylenisch ungesättigten Nitrilen mit bis zu 20 C-Atomen und Vinylethern von 1 bis 10 C-Atome enthaltenden Alkoholen und besonders bevorzugt handelt es sich um ethylenisch ungesättigten Nitrilen mit bis zu 20 C-Atomen.

Ethylenisch ungesättigte Nitrile mit bis zu 20 C-Atomen

Beispiele für ethylenisch ungesättigte Nitrile sind Fumarsäuredinitril, Acrylnitril und Methacrylnitril, bevorzugt Acrylnitril und Methacrylnitril und besonders bevorzugt Acrylnitril.

Vinylester von bis zu 20 C-Atome enthaltenden Carbonsäuren

Vinylester von Carbonsäuren mit 1 bis 20 C-Atomen sind z.B. Vinyllaurat, Vinylstearat, Vinylpropionat, Versaticsäurevinylester, Vinylbutyrat und Vinylacetat, bevorzugt Vinylacetat.

Vinylhalogenide mit bis zu 10 C-Atomen

Die Vinylhalogenide sind mit Chlor, Fluor oder Brom substituierte ethylenisch ungesättigte Verbindungen, bevorzugt Vinylchlorid und Vinylidenchlorid.

Vinylether von 1 bis 10 C-Atome enthaltenden Alkoholen

Als Vinylether zu nennen sind z.B. Methylvinylether, Ethylvinylether, *n*-Propylvinylether, *iso*-Propylvinylether, *n*-Butylvinylether, *sek*-Butylvinylether, *iso*-Butylvinylether, *tert*-Butylvinylether und *n*-Octylvinylether. Bevorzugt wird Vinylether von 1 bis 4 C-Atome enthaltenden Alkoholen.

$\alpha,\beta$-Ethylenisch ungesättigten Carbonsäure (D1) und (D2)

Dabei handelt es sich um 3 bis 10, bevorzugt 3 bis 6, besonders bevorzugt 3 bis 4 Kohlenstoffatome aufweisende $\alpha,\beta$-ethylenisch ungesättigten Carbonsäuren.

Optional können die ionischen Gruppen auch latent sein, wie beispielsweise in Maleinsäureanhydrid, wo die säure Funktionalität in der Form einer Anhydridgruppe vorhanden ist.

Bevorzugt sind (Meth)acrylsäure, Crotonsäure oder Dicarbonsäuren, z.B. Itaconsäure, Maleinsäure oder Fumarsäure, besonders bevorzugt Methacrylsäure und Acrylsäure.

(Meth)Acrylsäure steht in dieser Beschreibung für Methacrylsäure und Acrylsäure.

Vernetzer (E1) und (E2)

Vernetzer sind solche, die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere genau 2.
Als Beispiele genannt seien für Di- und Poly(meth)acrylate 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)acrylat, Triethylenglykoldi(meth)acrylat, Tetraethylenglykoldi(meth)acrylat, Trimethylolpropantri(meth)acrylat, Trimethylolethantri(meth)acrylat, Pentaerythritoltri- und -tetra(meth)acrylat.

Ferner erwähnt sei Divinylbenzol und Ally(meth)acrylat

Verbindungen (F1) und (F2) sind ausgewählt aus der Gruppe bestehend aus (Meth)acrylsäure 2-(2-oxo-imidazolidin-1-yl)-ethyl ester, 2-Ureido(meth)acrylat, N-[2-(2-oxo-oxazolidin-3-yl)-ethyl]-methacrylat, Acetoacetoxyethylacrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid.
Bevorzugt sind (Meth)acrylsäure 2-(2-oxo-imidazolidin-1-yl)-ethyl ester, (Acetoacetoxy) ethyl methacrylat und Diacetonacrylamid, besonders bevorzugt ist Diacetonacrylamid.
Wenn Verbindungen (F1) und (F2) eingesetzt werden, so werden diese bevorzugt in der ersten Stufe und nicht in der zweiten Stufe eingesetzt, d.h. wenn die Menge an $((F1) + (F2)) \neq 0$ ist, so ist bevorzugt die Menge an $(F1) \neq 0$ und $(F2) = 0$.

(G1) und (G2)

Bei diesen Verbindungen handelt es sich um mindestens eine Verbindung mit einer (Meth)-acrylat- und einer Epoxygruppe. Insbesondere zu erwähnen sind Glycidylacrylat und Glycidylmethacrylat, bevorzugt Glycidylmethacrylat.

(H1) und (H2)

Bei diesen Verbindungen handelt es sich um mindestens ein $\alpha,\beta$-ethylenisch ungesättigtes Carbonsäureamid.
Besonders bevorzugt sind (Meth)acrylsäureamid, Crotonsäureamid oder Amide von Dicarbonsäuren, z.B. Itaconsäurediamid, Maleinsäurediamid oder Fumarsäurediamid, besonders bevorzugt Methacrylsäureamid und Acrylsäureamid,
Wenn Verbindungen (H1) und (H2) eingesetzt werden, so werden diese bevorzugt in der ersten Stufe und nicht in der zweiten Stufe eingesetzt, d.h. wenn die Menge an $((H1) + (H2)) \neq 0$ ist, so ist bevorzugt die Menge an $(H1) \neq 0$ und $(H2) = 0$.
Es können weiterhin in untergeordneten Mengen, beispielsweise in weniger als 5 Gew%, bevorzugt weniger als 3 Gew%, besonders bevorzugt weniger als 1 Gew%, andere als die oben aufgeführten Monomere eingesetzt werden.
Beispiele für diese weiteren Monomere sind phosphorhaltige Monomere z. B. Vinylphosphonsäure und Allylphosphonsäure. Geeignet sind weiter die Mono- und Diester der Phosphonsäure und Phosphorsäure mit Hydroxyalkyl(meth)acrylaten, speziell die Monoester. Geeignet sind weiter Diester der Phosphonsäure und Phosphorsäure die einfach mit einem Hydroxyalkyl(meth)acrylat und zusätzlich einfach mit einem davon verschiedenen Alkohol, z. B. einem Alkanol, verestert sind. Geeignete Hydroxyalkyl(meth)acrylate für diese Ester sind die im Folgenden als separate Monomere genannten, insbesondere 2-Hydroxyethyl(meth)acrylat, 3-Hydroxypropyl(meth)acrylat, 4-Hydroxybutyl(meth)acrylat, etc. Entsprechende Dihydrogenphosphatestermonomere umfassen Phosphoalkyl(meth)acrylate, wie 2-Phosphoethyl(meth)acrylat, 2-Phosphopropyl(meth)acrylat, 3-Phosphopropyl(meth)acrylat, Phosphobutyl(meth)acrylat und 3-Phospho-2-hydroxypropyl(meth)acrylat. Geeignet sind auch die Ester der Phosphonsäure und Phosphorsäure mit alkoxilierten Hydroxyalkyl(meth)acrylaten, z. B. die Ethylenoxidkondensate von (Meth)acrylaten, wie $H_2C=C(CH_3)COO(CH_2CH_2O)_nP(OH)_2$ und $H_2C=C(CH_3)COO(CH_2CH_2O)_nP(=O)(OH)_2$, worin n für 1 bis 50 steht. Weiter geeignet sind Phosphoalkylcrotonate, Phosphoalkylmaleate, Phosphoalkylfumarate, Phosphodialkyl(meth)-acrylate, Phosphodialkylcrotonate und Allylphosphate. Weitere geeignete Phosphorgruppenhaltige Monomere sind in WO 99/25780 und US 4,733,005 beschrieben, worauf hier Bezug genommen wird.
Weiterhin geeignet sind Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure. Geeignete Styrolsulfonsäuren und Derivate davon sind Styrol-4-sulfonsäure und Styrol-3-sulfonsäure und die Erdalkali- oder Alkalimetallsalze davon, z. B. Natrium-styrol-3-sulfonat und Natrium-styrol-4-sulfonat, Poly(allylglycidyl ether)und Mischungen davon, in Form verschiedener Produkte der Bezeichnung Bisomer® von Laporte Performance Chemicals, UK. Dazu zählt z. B. Bisomer® MPEG 350 MA, ein Methoxypolyethylenglykolmonomethacrylat. Die funktionellen Gruppen der Monomere tragen zur Vermittlung der latenten Vernetzbarkeit der Zusammensetzung bei. Dabei findet die Vernetzung entweder durch Reaktion miteinander oder durch Zugabe eines weiteren Vernetzungsmittels statt. Bevorzugt findet die Vernetzung erst nach der eigentlichen Filmbildung statt.

Dabei ist es wichtig nicht zu viel zusätzliches Vernetzungsmittel einzusetzen, da dies zu Restvernetzungsmittel-Rückständen führen kann. Zu wenig Vernetzungsmittel andererseits kann zu einer löslichen Beschichtung führen.

Funktionelle Vernetzergruppen sind beispielsweise Keto-, Aldehyd-und/oder acetoacetoxy Carbonylgruppen und die anschließend zugesetzten, formulierten Vernetzungsmittel können ein Polyamin oder Polyhydrazid wie Adipinsäuredihydrazid (ADDH), Oxalsäuredihydrazid, Phthalsäuredihydrazid, Terephthalsäuredihydrazid, Isophorondiamin und 4,7-Dioxadecan-1,1O-Diamin umfassen oder ein Vernetzungsmittel das semi-Carbazid oder hydrazinfunktionelle Gruppen trägt. Alternativ könnte das Polymer hydrazidfunktionellen Gruppen tragen und das anschließend formulierte Vernetzungsmittel könnte ketofunktionelle Gruppen enthalten.

Die funktionellen Gruppen können auch Carboxylfunktionen sein und das anschließend formulierte Vernetzungsmittel könnte Aziridin-, Epoxid-oder Carbodiimid funktionellen Gruppen enthalten, oder die funktionellen Gruppen können silanfunktionellen Gruppen sein und das anschließend formulierte Vernetzungsmittel kann ebenfalls silanfunktionelle Gruppen enthalten. Die funktionellen Gruppen können auch Ureidogruppen sein und das anschließend zugegebene Vernetzungsmittel ein Polyaldehyd, beispielsweise ein eins bis zehn C-Atome aufweisendes $\alpha,\omega$-Dialdehyde wie Glyoxal, Glutardialdehyd oder Malondialdehyd bzw. deren Acetale und Halbacetale. Siehe EP 0789724.

Selbstverständlich sind auch Kombinationen von den verschiedenen funktionellen Gruppen und Vernetzungsmechanismen möglich.

Vinylmonomeren enthaltend vernetzende Gruppen sind beispielsweise Allyl, Glycidyl-oder Acetoacetoxyester, Acetoacetoxyamide, Keto-und Aldehyd-funktionelle Vinylmonomeren, ketohaltigen Amide wie Diacetonacrylamid oder Silan(meth)acrylmonomere.

Bevorzugte vernetzende Gruppen tragende Vinylmonomere sind Acetoacetoxyethylmethacrylat (AAEM), Diacetonacrylamid (DAAM) und Silan(meth)acryl-Monomere; am meisten bevorzugt DAAM.

Bevorzugte Vernetzungsmechanismen umfassen Vernetzung von silanfunktionellen Gruppen und Vernetzung von ketofunktionellen mit hydrazidfunktionellen Gruppen.
Am meisten bevorzugt ist die Kombination von DAAM und ADDH Vernetzung.

Das Polymerisat der ersten Stufe ist bei niedrigen pH-Werten von z.B. 2 bis 3 und mit nicht neutralisierten Säuregruppen nicht wasserlöslich aber in Wasser dispergiert. Wenn während oder vor und während der Polymerisation der zweiten Stufe Base zugegeben wird, erhöht sich sukzessive mit steigendem Neutralisationsgrad der Säuregruppen die Hydrophilie und Wasserlöslichkeit des Polymerisats der ersten Stufe. Mit zunehmender Hydrophilie und Wasserlöslichkeit kann das Polymerisat der ersten Stufe zunehmend als Schutzkolloid für das Polymer der zweiten Stufe wirken und gegen Ende der Polymerisation die Polymerdispersion mit hohem Polymerfeststoffgehalt stabilisieren. Schutzkolloide sind polymere Verbindungen, die bei Solvatation große Mengen Wasser binden und in der Lage sind, Dispersionen von wasserunlöslichen Polymeren zu stabilisieren.

Die bei Neutralisation als Schutzkolloide wirksam werdenden Polymerisate der ersten Stufe werden vorzugsweise in einer Menge von 5 bis 95, mehr bevorzugt 7 bis 80 und besonders bevorzugt 10 bis 50 Gew.-% bezogen auf 100 Gew.-% der zu polymerisierenden Monomeren verwendet.

In einer bevorzugten Ausführungsform handelt es sich bei dem Polymerisat der ersten Stufe um ein Copolymer, welches

(i) in einer Menge von 7 bis 80 Gew.%, bezogen auf 100 Gew.-Teile der insgesamt in der ersten und zweiten Stufe zu polymerisierenden Monomeren, eingesetzt wird,
(ii) zu mindestens z.B. 50 oder 60 Gew.-% und bis zu 99 Gew-% aus Hauptmonomeren aufgebaut ist, welche ausgewählt sind aus der Gruppe der Monomere A1 und B1 und
(iii) 0,1 bis 10 Gew.-% mindestens einer $\alpha,\beta$-ethylenisch ungesättigten Carbonsäure, oder Vinylmonomer mit latenten ionische Gruppen (Monomere D1),
(iv) 0,1 bis 10 Gew.-% mindestens einer Verbindung ausgewählt aus der Gruppe bestehend aus (Meth)acrylsäure 2-(2-oxo-imidazolidin-1-yl)-ethyl ester, 2-Ureido(meth)acrylat, Acetoacetoxyethylacrylat, Acetoacetoxypropylmethacrylat, Acetoacetoxybutyl methacrylat, 2-(Acetoacetoxy) ethyl methacrylat, Diacetonacrylamid (DAAM) und Diacetonmethacrylamid (Monomere F1),
(v) 0 bis 10 Gew.-% mindestens einer Verbindung ausgewählt aus der Gruppe eines $\alpha,\beta$-ethylenisch ungesättigten Carbonsäureamids (Monomere H1),
(vi) 0 bis 10 Gew.-% mindestens einer Verbindung ausgewählt aus den Monomeren C1, E1 und G1

wobei die Mengenangaben (ii) bis (vi) jeweils bezogen auf 100 Gew.-% der in der ersten Stufe zu polymerisierenden Monomere sind.

In einer bevorzugten Ausführungsform der Erfindung wird bei der Polymerisation der ersten Stufe mindestens ein Molekulargewichtsregler eingesetzt. Hierdurch kann durch eine Kettenabbruchsreaktion die Molmasse des Emulsionspolymerisats verringert werden. Die Regler werden dabei an das Polymer gebunden, im Allgemeinen an das Kettenende. Die Menge der Regler beträgt insbesondere 0,05 bis 4 Gew.-Teile, besonders bevorzugt 0,05 bis 2 Gew.-Teile bezogen auf 100 Gew.-Teile der insgesamt in der ersten und zweiten Stufe zu polymerisierenden Monomeren. Geeignete Regler sind z.B. Verbindungen mit einer Thiolgruppe wie tert.-Butylmercaptan, Thioglycolsäurealkylester, Mercaptoethanol, Mercaptopropionsäure, Mercaptopropyltrimethoxysilan, n- oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

Die im Anschluss an die erste Stufe ausgeführte Neutralisation erfolgt mit einer Base. Die Base führt zu einer Teil- oder kompletten Neutralisation der ionischen oder latent-ionischen Gruppen des Polymeren der ersten Stufe; sie kann zu einer Quellung der Polymerteilchen führen, aber sie auch komplett in Lösung überführen. Vorzugsweise wird nur eine Teilneutralisierung durchgeführt, beispielsweise bis zu 80% der vorhandenen ionischen oder latent-ionischen Gruppen.. Als Basen können beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin, Morpholin, Ethylendiamin, 2-Diethylaminethylamin, 2,3-Diaminopropan, 1,2-Propy-lendiamin, Dimethylaminopropylamin, Neopentandiamin, Hexamethylendiamin, 4,9-Dioxado-decan-1,12-diamin, Polyethylenimin oder Polyvinylamin eingesetzt werden

Die Säuregruppen des Polymerisats der ersten Stufe können partiell oder vollständig mit geeigneten Basen neutralisiert werden. Vorzugsweise verwendet man Natronlauge, Kalilauge oder Ammoniak als Neutralisationsmittel.

In einer Ausführungsform der Erfindung erfolgt die Polymerisation der ersten Stufe mittels der Methode der in-situ Saatfahrweise. Dazu wird ein Teil eines Monomers oder des Monomergemisches der ersten Stufe, beispielsweise < 35 Gew.%, vorzugsweise < 20 Gew.% bezogen auf das Gesamtgewicht der Monomere der ersten Stufe, zusammen mit Emulgator, zum Beispiel < 10 Gew.%, vorzugsweise < 3 Gew.%, bezogen auf das Gesamtgewicht der Monomere der ersten Stufe vorgelegt und mit Hilfe eines Initiators anpolymerisiert, wonach anschließend die restliche Menge der ersten Stufe zudosiert wird.

Bei den für die Polymerisation der zweiten Stufe eingesetzten Monomeren handelt es sich vorzugsweise zu mindestens 60 Gew.-%, bevorzugt zu mindestens 80 Gew.-%, z.B. von 80 bis 100 Gew.%, besonders bevorzugt zu mindestens 90 Gew.-% oder zu 100 Gew.%, bezogen auf die Gesamtmenge der Monomere der zweiten Stufe, aus den Hauptmonomeren A2 und/oder B2.

Ganz besonders bevorzugt sind Methylacrylat, Methylmethacrylat, Ethylacrylat, n-Butylacrylat, n-Butylmethacrylat, n-Hexylacrylat, Octylacrylat, 2-Ethylhexylacrylat, 2-Propylheptylacrylat, Styrol, sowie Mischungen dieser Monomere.

Die Zugabe der Monomeren der zweiten Stufe kann im Sinne einer Gradientenfahrweise erfolgen. Unter der Gradientenfahrweise im Sinne der vorliegenden Erfindung versteht man eine Emulsionspolymerisation, bei der ein oder mehrere Monomere mit nicht konstanter Geschwindigkeit zudosiert werden. Aus Gründen der einfachen apparativen Handhabbarkeit wurden bei den hier beschriebenen Experimenten die Geschwindigkeiten nicht kontinuierlich (= "echter Gradient"), sondern stufenweise (= interpolierter Gradient) variiert (im mathematischen Sinne stellt somit die Auftragung der Dosiergeschwindigkeit gegen die Zeit eine nichtstetige Funktion dar). Kontinuierliche Geschwindigkeitsänderungen sind prinzipiell aber auch ohne großen Mehraufwand durchführbar.

In einer Ausführungsform ist das in der ersten Stufe eingesetzte Monomer mit mindestens einer Säuregruppe D1, Methacrylsäure; das eingesetzte Monomer F1 Diacetonacrylamid und die in der ersten Stufe eingesetzten weiteren Monomere A1 und/oder B1 ausgewählt aus 2-Ethylhexylacrylat, n-Butylacrylat, n-Butylmethacrylat, Methylacrylat, Methylmethacrylat, Styrol und deren Gemisch; und sind mindestens 80 Gew.% der in der zweiten Stufe eingesetzten Monomere A2 und/oder B2, ausgewählt aus der Gruppe bestehend aus C1- bis C10-Alkylacrylaten, C1- bis C10-Alkylmethacrylaten, Styrol und deren Gemisch. Anschließend wird als zusätzliches Vernetzungsmittel Adipinsäuredihydrazid zugesetzt.

Das gewichtsmittlere Molekulargewicht der Monomere der Polymerisation der ersten Stufe liegt zwischen 5 und 100 kDa, bevorzugt zwischen 10 und 50 kDa. Die Monomere der Polymerisation der ersten Stufe sind so ausgewählt, dass die für ein aus den Monomeren der ersten Stufe hergestelltes Polymer berechnete Glasübergangstemperatur größer als 50 °C ist, insbesondere im Bereich von 50 °C bis 150 °C oder im Bereich von 70 °C bis 125 °C liegt.

Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc.

1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g{}^1 + x^2/T_g{}^2 + .... x^n/T_g{}^n,$$

wobei $x^1$, $x^2$, .... $x^n$ die Massenbrüche der Monomeren 1, 2, .... n und $T_g{}^1$, $T_g{}^2$, .... $T_g{}^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989. Für Ethylacrylat wird ein Wert von -13 °C verwendet.

Die Monomere der Polymerisation der zweiten Stufe sind so ausgewählt, dass die für ein aus den Monomeren der zweiten Stufe hergestelltes Polymer berechnete Glasübergangstemperatur mindestens 50 °C niedriger ist, als die der ersten Stufe, vorzugsweise im Bereich kleiner 10 °C liegt, insbesondere im Bereich von 0 °C bis -80 °C.

Das Gewichtsverhältnis der Menge der in der ersten Stufe eingesetzten Monomere zur Menge der in der zweiten Stufe eingesetzten Monomere beträgt vorzugsweise von 5:95 bis 95:5 oder von7:93 bis 80:20, besonders bevorzugt von 10:90 bis 50:50.

Die Herstellung der erfindungsgemäßen Polymerdispersion erfolgt durch Emulsionspolymerisation. Bei der Emulsionspolymerisation werden ethylenisch ungesättigte Verbindungen (Monomere) in Wasser polymerisiert, wobei üblicherweise ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Erfindungsgemäß erfolgt aber sowohl die Polymerisation der ersten Stufe als auch die Polymerisation der zweiten Stufe emulgatorarm oder ganz oder nahezu emulgatorfrei. Vorzugsweise wird insgesamt weniger als 2,5 oder weniger als 2 ,0 Gew.% Emulgator, insbesondere weniger als 1,5 Gew.%, bezogen auf den Feststoffgehalt der Polymerdispersion eingesetzt. Zur Stabilisierung der bei der Polymerisation der zweiten Stufe entstehenden Polymerdispersion wird das Polymerisat der ersten Stufe verwendet, welches in situ durch Zugabe von Neutralisationsmittel von einem nicht als Schutzkolloid wirksamen, wasserunlöslichen Polymer in ein als Schutzkolloid wirksames, wasserlösliches oder wassergequollenes Polymer umgewandelt wird.

Die Herstellung der Polymerdispersion, erfolgt üblicherweise in Gegenwart wenigstens einer grenzflächenaktiven Verbindung. Eine ausführliche Beschreibung geeigneter Schutzkolloide findet sich in Houben-Weyl, Methoden der organischen Chemie, Band XIV/1, Makromolekulare Stoffe, Georg Thieme Verlag, Stuttgart, 1961, S. 411 bis 420. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Als Emulgatoren sind sowohl anionische, kationische als auch nichtionische Emulgatoren geeignet. Vorzugsweise werden als grenzflächenaktive Substanzen Emulgatoren eingesetzt, deren relative Molekulargewichte üblicherweise unterhalb derer von Schutzkolloiden liegen. Insbesondere hat es sich bewährt, ausschließlich anionische Emulgatoren oder eine Kombination aus wenigstens einem anionischen Emulgator und wenigstens einem nichtionischen Emulgator einzusetzen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_{10}$), Ethoxylate langkettiger Alkohole (EO-Grad: 3 bis 100, Alkylrest: $C_8$-$C_{36}$) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest $C_1$-$C_{30}$, mittlerer Ethoxylierungsgrad 5 bis 100) und darunter besonders bevorzugt solche mit einem linearen $C_{12}$-$C_{20}$-Alkylrest und einem mittleren Ethoxylierungsgrad von 10 bis 50 sowie ethoxylierte Monoalkylphenole, eingesetzt.

Geeignete anionische Emulgatoren sind beispielsweise Alkali- und Ammoniumsalze von Alkylsulfaten (Alkylrest: $C_8$-$C_{22}$), von Schwefelsäurehalbestern ethoxylierter Alkanole (EO-Grad: 2 bis 50, Alkylrest: $C_{12}$-$C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$-$C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208. Als anionische Emulgatoren sind ebenfalls Bis(phenylsulfonsäure)ether bzw. deren Alkali- oder Ammoniumsalze, die an einem oder beiden aromatischen Ringen eine $C_4$-$C_{24}$-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-$C_6$-$C_{20}$-Alkylpyridinen, -morpholinen oder - imidazolen, z. B. N-Laurylpyridiniumchlorid.

Den Polymerdispersionen können weiterhin übliche Hilfs- und Zusatzstoffe zugesetzt werden. Dazu zählen beispielsweise den pH-Wert einstellende Substanzen, Reduktions- und Bleichmittel, wie z. B. die Alkalimetallsalze der Hydroxymethansulfinsäure (z. B. Rongalit® C der BASF Aktiengesellschaft), Komplexbildner, Desodorantien, Geruchsstoffe und Viskositätsmodifizierer, wie Alkohole, z. B. Glycerin, Methanol, Ethanol, tert.-Butanol, Glykol etc. Diese Hilfs- und Zusatzstoffe können den Polymerdispersionen in der Vorlage, einem der Zuläufe oder nach Abschluss der Polymerisation zugesetzt werden.

Vorzugsweise erfolgt die Neutralisation von Säuregruppen des ersten Polymerisats durch zumindest teilweisen Zulauf eines Neutralisationsmittels vor und/oder während der Polymerisation der zweiten Stufe. Das Neutralisationsmittel kann dabei in einem gemeinsamen Zulauf mit den zu polymerisierenden Monomeren oder in einem separaten Zulauf zugegeben werden. Nach Zulauf sämtlicher Monomere der 2. Stufe ist vorzugsweise die zur Neutralisation von mindestens 10%, vorzugsweise 25 bis 100% oder 50 bis 95% Säureäquivalenten benötigte Menge an Neutralisationsmittel in dem Polymerisationsgefäß enthalten.

Die Emulsionspolymerisation der ersten und zweiten Stufe kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,2 bis 20 Gew.-%, besonders bevorzugt 0,3 bis 10 Gew.-%, bezogen auf die zu polymerisierenden Monomeren. Es können auch mehrere, verschiedene Initiatoren bei der Emulsionspolymerisation Verwendung finden.

Bei der Polymerisation der zweiten Stufe können die oben genannten Molekulargewichtsregler eingesetzt werden. Vorzugsweise erfolgt die Polymerisation der zweiten Stufe aber ohne Zugabe von weiteren Molekulargewichtsreglern.

Die Emulsionspolymerisation erfolgt in der Regel bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation der ersten Stufe kann sowohl als Batchprozess als auch in Form eines Zulaufverfahrens, einschließlich Stufen- oder Gradientenfahrweise, durchgeführt werden.

Auch die Emulsionspolymerisation der zweiten Stufe kann sowohl als Batchprozess als auch in Form eines Zulaufverfahrens, einschließlich Stufen- oder Gradientenfahrweise, durchgeführt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Häufig ist es vorteilhaft, wenn die nach Abschluss der Polymerisationsstufen erhaltene wässrige Polymerisatdispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas. Entsprechende chemische und/oder physikalische Methoden sind dem Fachmann geläufig [siehe beispielsweise EP-A 771 328, DE-A 196 24 299, DE-A 196 21 027, DE-A 197 41 184, DE-A 197 41 187, DE-A 198 05 122, DE-A 198 28 183, DE-A 198 39 199, DE-A

19840 586 und 198 47 115]. Dabei bietet die Kombination aus chemischer und physikalischer Nachbehandlung den Vorteil, dass neben den nicht umgesetzten ethylenisch ungesättigten Monomeren, auch noch andere störende leichtflüchtige organischen Bestandteile (die sogenannten VOCs [volatile organic compounds]) aus der wässrigen Polymerisatdispersion entfernt werden. Die erfindungsgemäßen Dispersionen werden vorzugsweise nicht chemisch nachbehandelt.

Die nach dem erfindungsgemäßen Verfahren zugänglichen wässrigen Polymerisatdispersionen weisen Polymerisatteilchen auf, die eine gewichtsmittlere Teilchendurchmesser $D_w$ im Bereich ≥ 10 und ≤ 500 nm, bevorzugt ≥ 20 und ≤ 200 nm und insbesondere bevorzugt ≥ 20 nm bis ≤ 100 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Die nach dem erfindungsgemäßen Verfahren zugänglichen wässrigen Polymerisatdispersionen mit gewichtsmittleren Teilchendurchmessern $D_w$ ≤ 100 nm weisen eine überraschend gute Blockfestigkeit auf und eignen sich daher besonders als Bindemittel für die Beschichtung von Untergründen, insbesondere in transparenten wässrigen Formulierungen für Holzbeschichtungen.

Hierbei zeigen sich häufig Vorteile wie geringerer Bedarf an Verdickern zur Einstellung einer bestimmten Viskosität sowie gute und tiefe Einfärbung bei Verwendung von Farbpigmenten, gutes Eindringvermögen der Formulierung in die Holzoberfläche oder gute "Anfeuerung" der Holzmaserung. Außerdem weisen die erfindungsgemäßen wässrigen Polymerisatdispersionen eine verbesserte Filtrierbarkeit im Vergleich zu entsprechenden, nicht erfindungsgemäßen wässrigen Polymerisatdispersionen auf.

Die wässrige Polymerdispersion weist üblicherweise einen Feststoffgehalt von 20 bis 70 Gew.-%, vorzugsweise 35 bis 60 Gew.-%, auf.

Die erhaltene wässrige Polymerdispersion kann als solche oder gemischt mit weiteren, in der Regel filmbildenden, Polymeren als Bindemittelzusammensetzung in wässrigen Beschichtungsmitteln, wie Farb- oder Lackmischungen, verwendet werden.

Selbstverständlich können die nach dem erfindungsgemäßen Verfahren zugänglichen erfindungsgemäßen wässrigen Polymerisatdispersionen auch als Komponente bei der Herstellung von Klebstoffen, Dichtmassen, Kunststoffputzen, Papierstreichmassen, Faservliesen, und Beschichtungsmitteln für organische Substrate sowie zur Modifizierung von mineralischen Bindemitteln eingesetzt werden.

Ein weiterer Gegenstand der Erfindung ist ein Beschichtungsmittel in Form einer wässrigen Zusammensetzung, enthaltend

- wenigstens eine erfindungsgemäße Polymerisatdispersion, wie zuvor definiert,
- gegebenenfalls wenigstens einen (an)organischen Füllstoff und/oder wenigstens ein (an)organisches Pigment,
- gegebenenfalls wenigstens ein übliches Hilfsmittel, und
- Wasser.

Die erfindungsgemäßen Bindemittelzusammensetzungen kommen vorzugsweise in wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten ($V_P$) und Füllstoffen ($V_F$) zum Gesamtvolumen, bestehend aus den Volumina an Bindemittel ($V_B$), Pigmenten und Füllstoffen eines getrockneten Beschichtungsfilms in Prozent: $PVK = (V_P + V_F) \times 100 / (V_P + V_F + V_B)$. Anstrichmittel lassen sich anhand der PVK beispielsweise wie folgt einteilen:

| | |
|---|---|
| hochgefüllte Innenfarbe, waschbeständig, weiß/matt | ca. 85 |
| Innenfarbe, scheuerbeständig, weiß/matt | ca. 80 |
| Halbglanzfarbe, seidenmatt | ca. 35 |
| Halbglanzfarbe, seidenglänzend | ca. 25 |
| Hochglanzfarbe | ca. 15-25 |
| Außenfassadenfarbe, weiß | ca. 45-55 |
| Klarlack | < 5 |

Diese Dispersionen werden bevorzugt eingesetzt in PVK<50, besonders bevorzugt PVK<35 und noch starker bevorzugt in niedrig gefüllten Systemen (PVK<23) und Klarlacke (PVK<5).

Geeignete Füllstoffe in Klarlacksystemen sind z. B. Mattierungsmittel, die so gewünscht den Glanz stark beeinträchtigen. Mattierungsmittel sind in der Regel transparent und können sowohl organisch als auch anorganisch sein. Anorganische Füllstoffe auf Basis von Silika sind am besten geeignet und sind weit verbreitet im Handel erhältlich. Beispiele sind die Syloid®-Marken von W.R. Grace & Company und die Acematt®-Marken von der Fa. Evonik GmbH. Organische Mattierungsmittel sind z.B. erhältlich von der Fa. BYK-Chemie GmbH unter die Ceraflour®- und die Ceramat®-Marken, von der Fa. Deuteron GmbH unter die Deuteron MK®-Marke. Andere geeignete Füllstoffe für Dispersionsfarben sind Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Ropaque®- und AQACell®-Dispersionen. Weiterhin geeignet sind die Luconyl®-Marken der Fa. BASF SE, wie z.B. das Lyconyl®-Gelb, Lyconyl®-Braun und Luconyl®-Rot, insbesondere die transparanten Varianten.

Das erfindungsgemäße Beschichtungsmittel (wässrige Anstrichmittel) kann neben der Polymerdispersion, gegebenenfalls zusätzliche filmbildende Polymere, Pigment und weitere Hilfsmittel enthalten.

Zu den üblichen Hilfsmitteln zählen Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Wichtiger sind die Filmbildehilfsmittel, die Verdicker und Entschäumer. Geeignete Filmbildehilfsmittel sind z.B. Texanol® von der Fa. Eastman Chemicals und die Glykolether und -Ester z.B. im Handel erhältlich von BASF SE, unter den Namen Solvenon® und Lusolvan®, und von Dow unter den Handelsnamen Dowanol®. Die Menge beträgt vorzugsweise <10 Gew.-% und besonders bevorzugt < 5 Gew.-% auf Gesamtformulierung. Es ist auch möglich völlig ohne Lösemittel zu formulieren.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 2,5 Gew.-%, besonders bevorzugt weniger als 1,5 Gew.-% Verdicker, bezogen auf Feststoffgehalt des Anstrichmittels. Weitere Formulierungshinweise für Holzanstriche sind ausführlich beschrieben in ‚water-based acrylates for decorative coatings' von den Autoren M. Schwartz und R. Baumstark, ISBN 3-87870-726-6.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Das erfindungsgemäße Anstrichmittel kann in üblicher Weise auf Substrate aufgebracht werden, z. B. durch Streichen, Spritzen, Tauchen, Rollen, Rakeln.

Die erfindungsgemäßen Anstrichmittel zeichnen sich aus durch einfache Handhabung und gute Verarbeitungseigenschaften. Die Anstrichmittel sind schadstoffarm. Sie haben gute anwendungstechnische Eigenschaften, z. B. eine gute Wasserfestigkeit, gute Nasshaftung, und gute Blockfestigkeit, eine gute Überstreichbarkeit und sie zeigen beim Auftragen einen guten Verlauf. Das verwendete Arbeitsgerät lässt sich leicht mit Wasser reinigen.

Die Erfindung soll anhand nachfolgender nicht einschränkender Beispiele erläutert werden.

Beispiele

a) Herstellung der wässrigen Polymerisatdispersionen

In dieser Schrift wird das gewichtsmittlere Molekulargewicht Mw, wenn nicht anders angegeben, bestimmt über eine Größenausschlußchromatographie (size exclusion chromatography, SEC) mit Tetrahydrofuran + 0,1 Gew% Trifluoressigsäure als Eluent bei einer Durchflußgeschwindigkeit von 1 ml/min und 35 °C Säulentemperatur. Die Probe wird im Eluenten auf eine Konzentration von 2 mg/ml verdünnt und 100 µl davon injiziert, nachdem die Probelösung über ein 0,2 µm Filter (Sartorius Minisart SRP 25) zur Entfernung eines etwaigen Gelanteils filtriert wurde. Als Säulen wurden drei Säulen mit einem inneren Durchmesser von 7,5 mm kombiniert wie folgt: 5 cm Vorsäule (Plgel 10µ Guard Vorsäule) gefolgt von zwei 30 cm Trennsäulen (jeweils Plgel 10µ Mixed B). Die Detektion erfolgte mittels eines Differentialrefraktometers Agilent 1100, UV-Photometer Agilent 1100 VWD, PSS SLD7000-BI-MwA (UV/254 nm/Agilent). Die Kalibrierung erfolgte mit eng verteiltem Polystyrol-Standards der Fa. Polymer Laboratories mit Molekulargewichten von M = 580 bis M = 7.500.000, sowie Hexylbenzol (M = 162). Die Werte außerhalb des Elutionsbereichs wurden extrapoliert.

Durch die der Molekulargewichtsbestimmung vorgeschaltete Filtration wird ein etwaiger Gelanteil des Polymeren entfernt, so daß sich die angegebenen Werte auf den Solanteil beziehen.

Der unlösliche Anteil des Polymeren kann bestimmt werden durch vierstündige Extraktion mit Tetrahydrofuran in einer Soxhlet-Apparatur und, nach Trocknung des Rückstandes bis zur Gewichtskonstanz, Wägung des verbliebenen Rückstandes.

Der Feststoffgehalt (FG) wurde generell bestimmt, indem eine definierte Menge der wässrigen Polymerisatdispersion (ca. 1 g) in einem Aluminiumtiegel mit einem Innendurchmesser von ca. 5 cm bei 140 °C in einem Trockenschrank bis zur Gewichtskonstanz getrocknet wurde. Es wurden zwei separate Messungen durchgeführt. Die in den Beispielen angegebenen Werte stellen den Mittelwert der jeweiligen beiden Messergebnisse dar.

Die Bestimmung der Mindestfilmbildetemperatur (MFT) erfolge in Anlehnung an Ullmanns Enzyklopädie der technischen Chemie, 4. Aufl., Bd. 19, Verlag Chemie, Weinheim (1980), S. 17. Als Meßgerät diente eine Filmbildebank (Metallplatte, an die ein Temperaturgradient angelegt wird). Die Verfilmung erfolgte bei einer Naßschichtdicke von 1 mm. Als Mindestfilmbildetemperatur wird die Temperatur angegeben, bei der der Film beginnt, rissig zu werden.

**Vergleichsbeispiel 1 (VB 1)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 200,8 g | entionisiertes Wasser und |
| 35,0 g | einer 15 gew.-%igen wässrigen Lösung von Natriumlaurylsulfat |

vorgelegt und unter Rühren auf 87 °C aufgeheizt. Bei Erreichung dieser Temperatur wurden 29,8 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 120 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 45 Minuten mit gleichbleibendem Mengenstrom kontinuierlich zudosiert.

Zulauf 1 (homogene Mischung aus):

| | |
|---|---|
| 329,1 g | entionisiertes Wasser |
| 23,3 g | einer 15 gew.-%igen wässrigen Lösung von Natriumlaurylsulfat |
| 5,7 g | einer 50 gew.-%igen wässrigen Lösung von Acrylamid |
| 5,1 g | Acrylsäure |
| 27,0 g | einer 25 gew.-%igen Lösung von Ureidomethacrylat in Methylmethacrylat [a)] |
| 199,2 g | Methylmethacrylat und |
| 285,5 g | 2-Ethylhexylacrylat |

Zulauf 2 (homogene Mischung aus):

| | |
|---|---|
| 174,4 g | entionisiertes Wasser |
| 8,9 g | einer 15 gew.-%igen wässrigen Lösung von Natriumlaurylsulfat |

(fortgesetzt)

| | |
|---|---|
| 5,1 g | Acrylsäure |
| 27,0 g | einer 25 gew.-%igen Lösung von Ureidomethacrylat in Methylmethacrylat[a)] und |
| 148,2 g | Methylmethacrylat |

Zulauf 3 (homogene Lösung aus):

| | |
|---|---|
| 13,0 g | entionisiertem Wasser und |
| 1,0 g | Natriumperoxodisulfat |

Nach Beendigung der Zuläufe 2 und 3 ließ man das Polymerisationsgemisch noch 30 Minuten bei 87 °C nachreagieren. Daran anschließend wurden dem Polymerisationsgemisch zeitgleich beginnend über separate Zulaufleitungen 22,4 g einer 5 gew.-%igen wässrigen Wasserstoffperoxid-Lösung und eine Lösung aus 1,0 g Ascorbinsäure und 26,5 g entionisiertem Wasser innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 5,9 g einer 25 gew.-%igen wässrigen Ammoniaklösung neutralisiert und über ein 125 μm Filter filtriert.

Die erhaltene 1544 g der wässrigen Polymerisatdispersion wies einen Feststoffgehalt von 45,2 Gew.-% auf. Die MFT betrug 13°C. Die mit entionisiertem Wasser verdünnte wässrige Polymerisatdispersion hat einen gewichtsmittleren Teilchendurchmesser von 82 nm.

[a)] Plex® 6844-O der Fa. Röhm GmbH.

**Beispiel 1 (B1)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 567,3 g | entionisiertes Wasser und |
| 8,3 g | einer 15 gew.-%igen wässrigen Lösung von Natriumlaurylsulfat |

vorgelegt und unter Rühren auf 80 °C aufgeheizt. Bei Erreichung dieser Temperatur wurde der gesamte Zulauf 1 zugegeben und es wurde 2 Minuten gerührt. Danach wurde Zulauf 2 gestartet und innerhalb von 32 Minuten zudosiert. Nach Ende von Zulauf 2 wurde 10 min nachpolymerisiert, dann Zulauf 3 in 10 min zugegeben. Das gewichtsmittlere Molekulargewicht des Polymerisats einer Probe gezogen zu diesem Zeitpunkt betrug 23,1 kDa. Anschließend wurde Zulauf 4 gestartet und innerhalb von 104 Minuten mit gleichbleibendem Mengenstrom kontinuierlich zudosiert. 52 Minuten nach Anfang von Zulauf 4 wurde 10 g einer 3 gew.-%igen Ammoniaklösung zugegeben.

Zulauf 1 (homogene Lösung aus):

| | |
|---|---|
| 26,6 g | entionisiertem Wasser und |
| 2,0 g | Natriumperoxodisulfat |

Zulauf 2 (homogene Mischung aus):

| | |
|---|---|
| 8,1 g | Methacrylsäure |
| 1,9 g | Acrylsäure |
| 12,5 g | Styrol |
| 80,0 g | Methylmethacrylat |
| 12,5 g | n-Butylacrylat |
| 10,0 g | Diacetonacrylamid und |
| 2,0 g | 2-Ethylhexylthioglykolat |

Zulauf 3 (homogene Mischung aus):

| | |
|---|---|
| 7,0 g | entionisiertem Wasser und |
| 1,0 g | einer 25 gew.-%igen Ammoniaklösung |

Zulauf 4 (homogene Mischung aus):

| | |
|---|---|
| 260,0 g | n-Butylacrylat und |
| 115,0 g | Methylmethacrylat |

Nach Beendigung des Zulaufs 4 ließ man das Polymerisationsgemisch noch 90 Minuten bei 80°C nachreagieren. Dann wurde 18,2 g einer 5 gew.-%igen Ammoniaklösung in 5 Minuten zugegeben.

Anschließend wurde die erhaltene wässrige Polymerisatdispersion auf Raumtemperatur abgekühlt. Bei einer Temperatur unter 40°C wurde 41,7 g einer 12 gew.-%igen wässrigen Lösung von Adipinsäuredihydrazid zugegeben. Zum Schluß wurde die Dispersion über ein 125 μm Filter filtriert.

Die erhaltene 1184,1 g der wässrigen Polymerisatdispersion wies einen Feststoffgehalt von 43,2 Gew.-% auf. Die MFT betrug ≤ 0°C. Die mit entionisiertem Wasser verdünnte wässrige Polymerisatdispersion hat einen gewichtsmittleren Teilchendurchmesser von 70 nm.

**Beispiel 2 (B2)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 567,2 g | entionisiertes Wasser und |
| 10,0 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 38 Minuten zudosiert. Nach Ende von Zulauf 2 wurde 10 min nachpolymerisiert, dann Zulauf 3 in 10 min zugegeben. Das gewichtsmittlere Molekulargewicht des Polymerisats einer Probe gezogen zu diesem Zeitpunkt betrug 23,8 kDa. Anschließend wurde Zulauf 4 gestartet und innerhalb von 96 Minuten mit gleichbleibendem Mengenstrom kontinuierlich zudosiert. 48 Minuten nach Anfang von Zulauf 4 wurde 12 g einer 3 gew.-%igen Ammoniaklösung zugegeben.

Zulauf 1 (homogene Lösung aus):

| | |
|---|---|
| 26,6 g | entionisiertem Wasser und |
| 2,0 g | Natriumperoxodisulfat |

Zulauf 2 (homogene Mischung aus):

| | |
|---|---|
| 9,8 g | Methacrylsäure |
| 2,3 g | Acrylsäure |
| 15,0 g | Styrol |
| 96,0 g | Methylmethacrylat |
| 15,0 g | n-Butylacrylat |
| 12,0 g | Diacetonacrylamid und |
| 2,4 g | 2-Ethylhexylthioglykolat |

Zulauf 3 (homogene Mischung aus):

| | |
|---|---|
| 8,4 g | entionisiertem Wasser und |
| 1,1 g | einer 25 gew.-%igen Ammoniaklösung |

Zulauf 4 (homogene Mischung aus):

| | |
|---|---|
| 242,0 g | n-Butylacrylat und |
| 108,0 g | Methylmethacrylat |

Nach Beendigung des Zulaufs 4 ließ man das Polymerisationsgemisch noch 90 Minuten bei 80°C nachreagieren. Dann wurde 21,8 g einer 5 gew.-%igen Ammoniaklösung in 5 Minuten zugegeben.

Anschließend wurde die erhaltene wässrige Polymerisatdispersion auf Raumtemperatur abgekühlt. Bei einer Temperatur unter 40°C wurde 50,0 g einer 12 gew.-%igen wässrigen Lösung von Adipinsäuredihydrazid zugegeben. Zum Schluß wurde die Dispersion über ein 125 μm Filter filtriert.

Die erhaltene 1199,1 g der wässrigen Polymerisatdispersion wies einen Feststoffgehalt von 42,6 Gew.-% auf. Die MFT betrug $\leq$ 0°C. Die mit entionisiertem Wasser verdünnte wässrige Polymerisatdispersion hat einen gewichtsmittleren Teilchendurchmesser von 66 nm.

**Beispiel 3 (B3)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 566,4 g | entionisiertes Wasser und |
| 11,7 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 45 Minuten zudosiert. Nach Ende von Zulauf 2 wurde 10 min nachpolymerisiert, dann Zulauf 3 in 10 min zugegeben. Das gewichtsmittlere Molekulargewicht des Polymerisats einer Probe gezogen zu diesem Zeitpunkt betrug 22,1 kDa. Anschließend wurde Zulauf 4 gestartet und innerhalb von 90 Minuten mit gleichbleibendem Mengenstrom kontinuierlich zudosiert. 45 Minuten nach Anfang von Zulauf 4 wurde 13,9 g einer 3 gew.-%igen Ammoniaklösung zugegeben.

Zulauf 1 (homogene Lösung aus):

| | |
|---|---|
| 26,6 g | entionisiertem Wasser und |
| 2,0 g | Natriumperoxodisulfat |

Zulauf 2 (homogene Mischung aus):

| | |
|---|---|
| 11,4 g | Methacrylsäure |
| 2,6 g | Acrylsäure |
| 17,5 g | Styrol |
| 112,0 g | Methylmethacrylat |
| 17,5 g | n-Butylacrylat |
| 14,0 g | Diacetonacrylamid und |
| 2,8 g | 2-Ethylhexylthioglykolat |

Zulauf 3 (homogene Mischung aus):

| | |
|---|---|
| 9,8 g | entionisiertem Wasser und |
| 1,3 g | einer 25 gew.-%igen Ammoniaklösung |

Zulauf 4 (homogene Mischung aus):

| | |
|---|---|
| 225,0 g | n-Butylacrylat und |
| 100,0 g | Methylmethacrylat |

Nach Beendigung des Zulaufs 4 ließ man das Polymerisationsgemisch noch 90 Minuten bei 80°C nachreagieren. Dann wurde 25,42 g einer 5 gew.-%igen Ammoniaklösung in 5 Minuten zugegeben.

Anschließend wurde die erhaltene wässrige Polymerisatdispersion auf Raumtemperatur abgekühlt. Bei einer Temperatur unter 40°C wurde 58,3 g einer 12 gew.-%igen wässrigen Lösung von Adipinsäuredihydrazid zugegeben. Zum Schluß wurde die Dispersion über ein 125 μm Filter filtriert.

Die erhaltene 1215,4 g der wässrigen Polymerisatdispersion wies einen Feststoffgehalt von 41,8 Gew.-% auf. Die MFT betrug ≤ 1°C. Die mit entionisiertem Wasser verdünnte wässrige Polymerisatdispersion hat einen gewichtsmittleren Teilchendurchmesser von 62 nm.

**Beispiel 4 (B4)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 1198,1 g | entionisiertes Wasser und |
| 26,0 g | einer 15 gew.-%igen wässrigen Lösung von Natriumlaurylsulfat |

vorgelegt und unter Rühren auf 80 °C aufgeheizt. Bei Erreichung dieser Temperatur wurde der gesamte Zulauf 1 zugegeben und es wurde 2 Minuten gerührt. Danach wurde Zulauf 2 gestartet und innerhalb von 40 Minuten zudosiert. Nach Ende von Zulauf 2 wurde 10 min nachpolymerisiert und dann Zulauf 3 in 10 min zugegeben. Das gewichtsmittlere Molekulargewicht des Polymerisats einer Probe gezogen zu diesem Zeitpunkt betrug 23,0 kDa. Anschließend wurde Zulauf 4 gestartet und innerhalb von 90 Minuten mit gleichbleibendem Mengenstrom kontinuierlich zudosiert. 45 Minuten nach Anfang von Zulauf 4 wurde 31,2 g einer 3 gew.-%igen Ammoniaklösung zugegeben.

Zulauf 1 (homogene Lösung aus):

| | |
|---|---|
| 69,1 g | entionisiertem Wasser und |
| 5,2 g | Natriumperoxodisulfat |

Zulauf 2 (homogene Mischung aus):

| | |
|---|---|
| 164,7 g | entionisiertem Wasser |
| 8,7 g | einer 15 gew.-%igen wässrigen Lösung von Natriumlaurylsulfat |
| 25,4 g | Methacrylsäure |
| 5,9 g | Acrylsäure |
| 39,0 g | Styrol |
| 249,6 g | Methylmethacrylat |
| 39,0 g | n-Butylacrylat |
| 156,0 g | einer 20 Gew.-% wässrigen Lösung von Diacetonacrylamid und |
| 6,2 g | 2-Ethylhexylthioglykolat |

Zulauf 3 (homogene Mischung aus):

| | |
|---|---|
| 21,7 g | entionisiertem Wasser und |
| 3,0 g | einer 25 gew.-%igen Ammoniaklösung |

Zulauf 4 (homogene Mischung aus):

| | |
|---|---|
| 629,2 g | n-Butylacrylat und |
| 280,8 g | Methylmethacrylat |

Nach Beendigung des Zulaufs 4 ließ man das Polymerisationsgemisch noch 90 Minuten bei 80°C nachreagieren. Dann wurde 56,7 g einer 5 gew.-%igen Ammoniaklösung in 5 Minuten zugegeben.

Anschließend wurde die erhaltene wässrige Polymerisatdispersion auf Raumtemperatur abgekühlt. Bei einer Temperatur unter 40°C wurde 130 g einer 12 gew.-%igen wässrigen Lösung von Adipinsäuredihydrazid zugegeben.

Zum Schluß wurde die Dispersion über ein 125 μm Filter filtriert.

Die erhaltene 3145,3 g der wässrigen Polymerisatdispersion wies einen Feststoffgehalt von 42,8 Gew.-% auf. Die MFT betrug ≤ 1°C. Die mit entionisiertem Wasser verdünnte wässrige Polymerisatdispersion hat einen gewichtsmittleren Teilchendurchmesser von 60 nm.

**Beispiel 5 (B5)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 840,5 g | entionisiertes Wasser und |
| 34,7 g | einer 15 gew.-%igen wässrigen Lösung von Natriumlaurylsulfat |

vorgelegt und unter Rühren auf 80 °C aufgeheizt. Bei Erreichung dieser Temperatur wurde der gesamte Zulauf 1 zugegeben und es wurde 2 Minuten gerührt. Danach wurde Zulauf 2 gestartet und innerhalb von 40 Minuten zudosiert. Nach Ende von Zulauf 2 wurde 10 min nachpolymerisiert und dann Zulauf 3 in 10 min zugegeben. Das gewichtsmittlere Molekulargewicht der Probe gezogen zu diesem Zeitpunkt war 22,0 kDa. Anschließend wurde Zulauf 4 gestartet und innerhalb von 90 Minuten mit gleichbleibendem Mengenstrom kontinuierlich zudosiert. 45 Minuten nach Anfang von Zulauf 4 wurde 31,2 g einer 3 gew.-%igen Ammoniaklösung zugegeben.

Zulauf 1 (homogene Lösung aus):

| | |
|---|---|
| 69,1 g | entionisiertem Wasser und |
| 5,2 g | Natriumperoxodisulfat |

Zulauf 2 (homogene Mischung aus):

| | |
|---|---|
| 130,0 g | entionisiertem Wasser |
| 8,7 g | einer 15 gew.-%igen wässrigen Lösung von Natriumlaurylsulfat |
| 25,4 g | Methacrylsäure |
| 5,9 g | Acrylsäure |
| 39,0 g | Styrol |
| 249,6 g | Methylmethacrylat |
| 39,0 g | n-Butylacrylat |
| 156,0 g | einer 20 Gew.-% wässrigen Lösung von Diacetonacrylamid und |
| 6,2 g | 2-Ethylhexylthioglykolat |

Zulauf 3 (homogene Mischung aus):

| | |
|---|---|
| 21,7 g | entionisiertem Wasser und |
| 3,0 g | einer 25 gew.-%igen Ammoniaklösung |

Zulauf 4 (homogene Mischung aus):

| | |
|---|---|
| 451,5 g | entionisiertem Wasser |
| 17,3 g | einer 15 gew.-%igen wässrigen Lösung von Natriumlaurylsulfat |
| 629,2 g | n-Butylacrylat und |
| 280,8 g | Methylmethacrylat |

Nach Beendigung des Zulaufs 4 ließ man das Polymerisationsgemisch noch 90 Minuten bei 80°C nachreagieren. Dann wurde 56,7 g einer 5 gew.-%igen Ammoniaklösung in 5 Minuten zugegeben.

Anschließend wurde die erhaltene wässrige Polymerisatdispersion auf Raumtemperatur abgekühlt. Bei einer Temperatur unter 40°C wurde 130 g einer 12 gew.-%igen wässrigen Lösung von Adipinsäuredihydrazid zugegeben. Zum Schluß wurde die Dispersion über ein 125 μm Filter filtriert.

Die erhaltene 3230,4 g der wässrigen Polymerisatdispersion wies einen Feststoffgehalt von 41,7 Gew.-% auf. Die MFT betrug ≤ 1°C. Die mit entionisiertem Wasser verdünnte wässrige Polymerisatdispersion hat einen gewichtsmittleren Teilchendurchmesser von 64 nm.

**Vergleichsbeispiel 2 (VB2)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 1474,8 g | entionisiertes Wasser und |
| 26,0 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 38 Minuten zudosiert. Nach Ende von Zulauf 2 wurde 10 min nachpolymerisiert und dann Zulauf 3 in 10 min zugegeben. Das gewichtsmittlere Molekulargewicht des Polymerisats einer Probe gezogen zu diesem Zeitpunkt betrug 23,0 kDa. Anschließend wurde Zulauf 4 gestartet und innerhalb von 96 Minuten mit gleichbleibendem Mengenstrom kontinuierlich zudosiert. 48 Minuten nach Anfang von Zulauf 4 wurde 31,2 g einer 3 gew.-%igen Ammoniaklösung zugegeben.

Zulauf 1 (homogene Lösung aus):

| | |
|---|---|
| 69,1 g | entionisiertem Wasser und |
| 5,2 g | Natriumperoxodisulfat |

Zulauf 2 (homogene Mischung aus):

| | |
|---|---|
| 25,4 g | Methacrylsäure |
| 5,7 g | Acrylsäure |
| 39,0 g | Styrol |
| 249,6 g | Methylmethacrylat |
| 39,0 g | n-Butylacrylat |
| 31,2 g | Diacetonacrylamid und |
| 6,2 g | 2-Ethylhexylthioglykolat |

Zulauf 3 (homogene Mischung aus):

| | |
|---|---|
| 21,7 g | entionisiertem Wasser und |
| 3,0 g | einer 25 gew.-%igen Ammoniaklösung |

Zulauf 4 (homogene Mischung aus):

| | |
|---|---|
| 629,2 g | n-Butylacrylat und |
| 280,8 g | Methylmethacrylat |

Nach Beendigung des Zulaufs 4 ließ man das Polymerisationsgemisch noch 90 Minuten bei 80°C nachreagieren. Dann wurde 56,7 g einer 5 gew.-%igen Ammoniaklösung in 5 Minuten zugegeben.

Anschließend wurde die erhaltene wässrige Polymerisatdispersion auf Raumtemperatur abgekühlt. Bei einer Temperatur unter 40°C wurde 130 g einer 12 gew.-%igen wässrigen Lösung von Adipinsäuredihydrazid zugegeben. Zum Schluß wurde die Dispersion über ein 125 μm Filter filtriert.

Die erhaltene 3123,8 g der wässrigen Polymerisatdispersion wies einen Feststoffgehalt von 41,3 Gew.-% auf. Die MFT betrug ≤ 1°C. Die mit entionisiertem Wasser verdünnte wässrige Polymerisatdispersion hat einen gewichtsmittleren Teilchendurchmesser von 65 nm.

**Beispiel 6 (B6)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 884,6 g | entionisiertes Wasser und |
| 15,6 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 38 Minuten zudosiert. Nach Ende von Zulauf 2 wurde 10 min nachpolymerisiert und dann Zulauf 3 in 10 min zugegeben. Das gewichtsmittlere Molekulargewicht einer Probe gezogen zu diesem Zeitpunkt betrug 22,5 kDa. Anschließend wurde Zulauf 4 gestartet und innerhalb von 96 Minuten mit gleichbleibendem Mengenstrom kontinuierlich zudosiert. 45 Minuten nach Anfang von Zulauf 4 wurde 18,7 g einer 3 gew.-%igen Ammoniaklösung zugegeben.

Zulauf 1 (homogene Lösung aus):

| | |
|---|---|
| 41,5 g | entionisiertem Wasser und |
| 3,1 g | Natriumperoxodisulfat |

Zulauf 2 (homogene Mischung aus):

| | |
|---|---|
| 15,2 g | Methacrylsäure |
| 3,5 g | Acrylsäure |
| 23,4 g | Styrol |
| 140,4 g | Methylmethacrylat |
| 23,4 g | n-Butylacrylat |
| 9,4 g | einer 25 gew.-%igen Lösung von Ureidomethacrylat in Methylmethacrylat [a)] |
| 18,7 g | Diacetonacrylamid und |
| 3,7 g | 2-Ethylhexylthioglykolat |

Zulauf 3 (homogene Mischung aus):

| | |
|---|---|
| 13,0 g | entionisiertem Wasser und |
| 1,8 g | einer 25 gew.-%igen Ammoniaklösung |

Zulauf 4 (homogene Mischung aus):

| | |
|---|---|
| 377,5 g | n-Butylacrylat und |
| 168,5 g | Methylmethacrylat |

Nach Beendigung des Zulaufs 4 ließ man das Polymerisationsgemisch noch 90 Minuten bei 80°C nachreagieren. Dann wurde 34,0 g einer 5 gew.-%igen Ammoniaklösung in 5 Minuten zugegeben.

Anschließend wurde die erhaltene wässrige Polymerisatdispersion auf Raumtemperatur abgekühlt. Bei einer Temperatur unter 40°C wurde 78 g einer 12 gew.-%igen wässrigen Lösung von Adipinsäuredihydrazid zugegeben. Zum Schluß wurde die Dispersion über ein 125 μm Filter filtriert.

Die erhaltene 1874 g der wässrigen Polymerisatdispersion wies einen Feststoffgehalt von 41,6 Gew.-% auf. Die MFT betrug ≤ 1°C. Die mit entionisiertem Wasser verdünnte wässrige Polymerisatdispersion hat einen gewichtsmittleren Teilchendurchmesser von 64 nm. [a)] Plex® 6844-O der Fa. Röhm GmbH.

**Beispiel 7 (B7)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 884,6 g | entionisiertes Wasser und |
| 15,6 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 38 Minuten zudosiert. Nach Ende von Zulauf 2 wurde 10 min nachpolymerisiert und dann Zulauf 3 in 10 min zugegeben. Das gewichtsmittlere Molekulargewicht des Polymerisats einer Probe gezogen zu diesem Zeitpunkt betrug 33,6 kDa. Anschließend wurde Zulauf 4 gestartet und innerhalb von 96 Minuten mit gleichbleibendem Mengenstrom kontinuierlich zudosiert. 45 Minuten nach Anfang von Zulauf 4 wurde 18,7 g einer 3 gew.-%igen Ammoniaklösung zugegeben.

Zulauf 1 (homogene Lösung aus):

| | |
|---|---|
| 41,5 g | entionisiertem Wasser und |
| 3,1 g | Natriumperoxodisulfat |

Zulauf 2 (homogene Mischung aus):

| | |
|---|---|
| 15,2 g | Methacrylsäure |
| 3,5 g | Acrylsäure |
| 23,4 g | Styrol |
| 118,6 g | Methylmethacrylat |
| 23,4 g | n-Butylacrylat |
| 31,2 g | einer 25 gew.-%igen Lösung von Ureidomethacrylat in Methylmethacrylat [a)] |
| 18,7 g | Diacetonacrylamid und |
| 3,7 g | 2-Ethylhexylthioglykolat |

[a)] Plex® 6844-O der Fa. Röhm GmbH.

Zulauf 3 (homogene Mischung aus):

| | |
|---|---|
| 13,0 g | entionisiertem Wasser und |
| 1,8 g | einer 25 gew.-%igen Ammoniaklösung |

Zulauf 4 (homogene Mischung aus):

| | |
|---|---|
| 377,5 g | n-Butylacrylat und |
| 168,5 g | Methylmethacrylat |

Nach Beendigung des Zulaufs 4 ließ man das Polymerisationsgemisch noch 90 Minuten bei 80°C nachreagieren. Dann wurde 34,0 g einer 5 gew.-%igen Ammoniaklösung in 5 Minuten zugegeben.

Anschließend wurde die erhaltene wässrige Polymerisatdispersion auf Raumtemperatur abgekühlt. Bei einer Temperatur unter 40°C wurde 78 g einer 12 gew.-%igen wässrigen Lösung von Adipinsäuredihydrazid zugegeben. Zum Schluß wurde die Dispersion über ein 125 μm Filter filtriert.

Die erhaltene 1874 g der wässrigen Polymerisatdispersion wies einen Feststoffgehalt von 41,5 Gew.-% auf. Die MFT betrug ≤ 1°C. Die mit entionisiertem Wasser verdünnte wässrige Polymerisatdispersion hat einen gewichtsmittleren Teilchendurchmesser von 87 nm.

**Vergleichsbeispiel 3 (VB3)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 323,1 g | entionisiertes Wasser und |
| 13,3 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 40 Minuten zudosiert. Nach Ende von Zulauf 2 wurde 10 min nachpolymerisiert, dann Zulauf 3 zugegeben, 10 min gerührt und anschließend wurde Zulauf 4 gestartet und innerhalb von 90 Minuten mit gleichbleibendem Mengenstrom kontinuierlich zudosiert. 45 Minuten nach Anfang von Zulauf 4 wurde 1,1 g einer 25 gew.-%igen Ammoniaklösung zugegeben.

Zulauf 1 (homogene Lösung aus):

| | |
|---|---|
| 26,6 g | entionisiertem Wasser und |
| 2,0 g | Natriumperoxodisulfat |

Zulauf 2 (homogene Mischung aus):

| | |
|---|---|
| 47,8 g | entionisiertem Wasser |
| 3,3 g | einer 15 gew.-%igen wässrigen Lösung von Natriumlaurylsulfat |
| 9,8 g | Methacrylsäure |
| 4,5 g | einer 50 gew.-%igen wässrigen Lösung von Acrylamid |
| 15,0 g | Styrol |
| 92,0 g | Methylmethacrylat |
| 15,0 g | n-Butylacrylat |
| 60,0 g | einer 20 gew.-%igen wässrigen Lösung von Diacetonacrylamid und |
| 2,4 g | 2-Ethylhexylthioglykolat |

Zulauf 3:

| | |
|---|---|
| 0,9 g | einer 25 gew.-%igen Ammoniaklösung |

Zulauf 4 (homogene Mischung aus):

| | |
|---|---|
| 147,3 g | entionisiertem Wasser |
| 6,7 g | einer 15 gew.-%igen wässrigen Lösung von Natriumlaurylsulfat |
| 242,0 g | n-Butylacrylat und |
| 108,0 g | Methylmethacrylat |

Nach Beendigung des Zulaufs 4 ließ man das Polymerisationsgemisch noch 90 Minuten bei 80°C nachreagieren. Dann wurde 3,4 g einer 25 gew.-%igen Ammoniaklösung zugegeben.

Anschließend wurde die erhaltene wässrige Polymerisatdispersion auf Raumtemperatur abgekühlt. Bei einer Temperatur unter 40°C wurde 50 g einer 12 gew.-%igen wässrigen Lösung von Adipinsäuredihydrazid zugegeben. Zum Schluß wurde die Dispersion über ein 125 $\mu$m Filter filtriert.

Das gewichtsmittlere Molekulargewicht des Polymerisats einer Probe, gezogen bevor Start von Zulauf 4 betrug 22,5 kDa.

Die erhaltene 1174 g der wässrigen Polymerisatdispersion wies einen Feststoffgehalt von 42,5 Gew.-% auf. Die MFT betrug $\leq$ 1°C. Die mit entionisiertem Wasser verdünnte wässrige Polymerisatdispersion einen gewichtsmittleren Teilchendurchmesser von 75 nm.

**Beispiel 8 (B8)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 840,2 g | entionisiertes Wasser und |
| 34,7 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 40 Minuten zudosiert.

Nach Ende von Zulauf 2 wurde 10 min nachpolymerisiert, dann Zulauf 3 zugegeben, 10 min gerührt und anschließend wurde Zulauf 4 gestartet und innerhalb von 90 Minuten mit gleichbleibendem Mengenstrom kontinuierlich zudosiert. 45 Minuten nach Anfang von Zulauf 4 wurde 2,6 g einer 25 gew.-%igen Ammoniaklösung zugegeben.

Zulauf 1 (homogene Lösung aus):

| | |
|---|---|
| 69,1 g | entionisiertem Wasser und |
| 5,2 g | Natriumperoxodisulfat |

Zulauf 2 (homogene Mischung aus):

| | |
|---|---|
| 109,4 g | entionisiertem Wasser |
| 8,7 g | einer 15 gew.-%igen wässrigen Lösung von Natriumlaurylsulfat |
| 22,8 g | Methacrylsäure |
| 17,3 g | einer 15 gew.-%igen wässrigen Lösung von Methacrylamid |
| 11,7 g | einer 50 gew.-%igen wässrigen Lösung von Acrylamid |
| 39,0 g | Styrol |
| 249,6 g | Methylmethacrylat |
| 39,0 g | n-Butylacrylat |
| 156,0 g | einer 20 gew.-%igen wässrigen Lösung von Diacetonacrylamid und |
| 6,2 g | 2-Ethylhexylthioglykolat |

Zulauf 3:

| | |
|---|---|
| 2,1 g | einer 25 gew.-%igen Ammoniaklösung |

Zulauf 4 (homogene Mischung aus):

| | |
|---|---|
| 382,9 g | entionisiertem Wasser |
| 17,3 g | einer 15 gew.-%igen wässrigen Lösung von Natriumlaurylsulfat |
| 629,2 g | n-Butylacrylat und |
| 280,8 g | Methylmethacrylat |

Nach Beendigung des Zulaufs 4 ließ man das Polymerisationsgemisch noch 90 Minuten bei 80°C nachreagieren. Dann wurde 8 g einer 25 gew.-%igen Ammoniaklösung zugegeben.

Anschließend wurde die erhaltene wässrige Polymerisatdispersion auf Raumtemperatur abgekühlt. Bei einer Temperatur unter 40°C wurde 130 g einer 12 gew.-%igen wässrigen Lösung von Adipinsäuredihydrazid zugegeben. Zum Schluß wurde die Dispersion über ein 125 µm Filter filtriert.

Das gewichtsmittlere Molekulargewicht des Polymerisats einer Probe, gezogen bevor Start von Zulauf 4 betrug 23,2 kDa.

Die erhaltene 3060 g der wässrigen Polymerisatdispersion wies einen Feststoffgehalt von 41,9 Gew.-% auf. Die MFT betrug ≤ 1°C. Die mit entionisiertem Wasser verdünnte wässrige Polymerisatdispersion einen gewichtsmittleren Teilchendurchmesser von 71 nm.

**Beispiel 9 (B9)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 840,2 g | entionisiertes Wasser und |
| 34,7 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 40 Minuten zudosiert.

Nach Ende von Zulauf 2 wurde 10 min nachpolymerisiert, dann Zulauf 3 zugegeben, 10 min gerührt und anschließend wurde Zulauf 4 gestartet und innerhalb von 90 Minuten mit gleichbleibendem Mengenstrom kontinuierlich zudosiert. 45 Minuten nach Anfang von Zulauf 4 wurde 2,3 g einer 25 gew.-%igen Ammoniaklösung zugegeben.

Zulauf 1 (homogene Lösung aus):

| | |
|---|---|
| 69,1 g | entionisiertem Wasser und |
| 5,2 g | Natriumperoxodisulfat |

Zulauf 2 (homogene Mischung aus):

| | |
|---|---|
| 91,0 g | entionisiertem Wasser |
| 8,7 g | einer 15 gew.-%igen wässrigen Lösung von Natriumlaurylsulfat |
| 19,5 g | Methacrylsäure |
| 39,0 g | einer 15 gew.-%igen wässrigen Lösung von Methacrylamid |
| 11,7 g | einer 50 gew.-%igen wässrigen Lösung von Acrylamid |
| 39,0 g | Styrol |
| 249,6 g | Methylmethacrylat |
| 39,0 g | n-Butylacrylat |
| 156,0 g | einer 20 gew.-%igen wässrigen Lösung von Diacetonacrylamid und |
| 6,2 g | 2-Ethylhexylthioglykolat |

Zulauf 3:

| | |
|---|---|
| 1,8 g | einer 25 gew.-%igen Ammoniaklösung |

Zulauf 4 (homogene Mischung aus):

| | |
|---|---|
| 382,9 g | entionisiertem Wasser |
| 17,3 g | einer 15 gew.-%igen wässrigen Lösung von Natriumlaurylsulfat |
| 629,2 g | n-Butylacrylat und |
| 280,8 g | Methylmethacrylat |

Nach Beendigung des Zulaufs 4 ließ man das Polymerisationsgemisch noch 90 Minuten bei 80°C nachreagieren. Dann wurde 6,8 g einer 25 gew.-%igen Ammoniaklösung zugegeben.
Anschließend wurde die erhaltene wässrige Polymerisatdispersion auf Raumtemperatur abgekühlt. Bei einer Temperatur unter 40°C wurde 130 g einer 12 gew.-%igen wässrigen Lösung von Adipinsäuredihydrazid zugegeben. Zum Schluß wurde die Dispersion über ein 125 μm Filter filtriert.
Das gewichtsmittlere Molekulargewicht des Polymerisats einer Probe, gezogen bevor Start von Zulauf 4 betrug 22,8 kDa.
Die erhaltene 3059 g der wässrigen Polymerisatdispersion wies einen Feststoffgehalt von 42,2 Gew.-% auf. Die MFT betrug ≤ 1°C. Die mit entionisiertem Wasser verdünnte wässrige Polymerisatdispersion einen gewichtsmittleren Teilchendurchmesser von 71 nm.

**Beispiel 10 (B10)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 840,2 g | entionisiertes Wasser und |
| 34,7 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 40 Minuten zudosiert.

Nach Ende von Zulauf 2 wurde 10 min nachpolymerisiert, dann Zulauf 3 zugegeben, 10 min gerührt und anschließend wurde Zulauf 4 gestartet und innerhalb von 90 Minuten mit gleichbleibendem Mengenstrom kontinuierlich zudosiert. 45 Minuten nach Anfang von Zulauf 4 wurde 1,9 g einer 25 gew.-%igen Ammoniaklösung zugegeben.

Zulauf 1 (homogene Lösung aus):

| | |
|---|---|
| 69,1 g | entionisiertem Wasser und |
| 5,2 g | Natriumperoxodisulfat |

Zulauf 2 (homogene Mischung aus):

| | |
|---|---|
| 72,6 g | entionisiertem Wasser |
| 8,7 g | einer 15 gew.-%igen wässrigen Lösung von Natriumlaurylsulfat |
| 16,3 g | Methacrylsäure |
| 60,7 g | einer 15 gew.-%igen wässrigen Lösung von Methacrylamid |
| 11,7 g | einer 50 gew.-%igen wässrigen Lösung von Acrylamid |
| 39,0 g | Styrol |
| 249,6 g | Methylmethacrylat |
| 39,0 g | n-Butylacrylat |
| 156,0 g | einer 20 gew.-%igen wässrigen Lösung von Diacetonacrylamid und |
| 6,2 g | 2-Ethylhexylthioglykolat |

Zulauf 3:

| | |
|---|---|
| 1,5 g | einer 25 gew.-%igen Ammoniaklösung |

Zulauf 4 (homogene Mischung aus):

| | |
|---|---|
| 382,9 g | entionisiertem Wasser |
| 17,3 g | einer 15 gew.-%igen wässrigen Lösung von Natriumlaurylsulfat |
| 629,2 g | n-Butylacrylat und |
| 280,8 g | Methylmethacrylat |

Nach Beendigung des Zulaufs 4 ließ man das Polymerisationsgemisch noch 90 Minuten bei 80°C nachreagieren. Dann wurde 5,7 g einer 25 gew.-%igen Ammoniaklösung zugegeben.

Anschließend wurde die erhaltene wässrige Polymerisatdispersion auf Raumtemperatur abgekühlt. Bei einer Temperatur unter 40°C wurde 130 g einer 12 gew.-%igen wässrigen Lösung von Adipinsäuredihydrazid zugegeben. Zum Schluß wurde die Dispersion über ein 125 μm Filter filtriert.

Das gewichtsmittlere Molekulargewicht des Polymerisats einer Probe, gezogen bevor Start von Zulauf 4 betrug 22,9 kDa.

Die erhaltene 3058 g der wässrigen Polymerisatdispersion wies einen Feststoffgehalt von 42,1 Gew.-% auf. Die MFT betrug ≤ 1°C. Die mit entionisiertem Wasser verdünnte wässrige Polymerisatdispersion einen gewichtsmittleren Teilchendurchmesser von 71 nm.

**Beispiel 11 (B11)**

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 840,2 g | entionisiertes Wasser und |
| 34,7 g | einer 15 gew.-%igen wässrigen Lösung von Natriumlaurylsulfat |

vorgelegt und unter Rühren auf 80 °C aufgeheizt wurden. Bei Erreichung dieser Temperatur wurde der gesamte Zulauf 1 zugegeben und es wurde 2 Minuten gerührt. Danach wurde Zulauf 2 gestartet und innerhalb von 40 Minuten zudosiert.

Nach Ende von Zulauf 2 wurde 10 min nachpolymerisiert, dann Zulauf 3 zugegeben, 10 min gerührt und anschließend wurde Zulauf 4 gestartet und innerhalb von 90 Minuten mit gleichbleibendem Mengenstrom kontinuierlich zudosiert. 45 Minuten nach Anfang von Zulauf 4 wurde 1,5 einer 25 gew.-%igen Ammoniaklösung zugegeben.

Zulauf 1 (homogene Lösung aus):

| | |
|---|---|
| 69,1 g | entionisiertem Wasser und |
| 5,2 g | Natriumperoxodisulfat |

Zulauf 2 (homogene Mischung aus):

| | |
|---|---|
| 54,2 g | entionisiertem Wasser |
| 8,7 g | einer 15 gew.-%igen wässrigen Lösung von Natriumlaurylsulfat |
| 13,0 g | Methacrylsäure |
| 82,3 g | einer 15 gew.-%igen wässrigen Lösung von Methacrylamid |
| 11,7 g | einer 50 gew.-%igen wässrigen Lösung von Acrylamid |
| 39,0 g | Styrol |
| 249,6 g | Methylmethacrylat |
| 39,0 g | n-Butylacrylat |
| 156,0 g | einer 20 gew.-%igen wässrigen Lösung von Diacetonacrylamid und |
| 6,2 g | 2-Ethylhexylthioglykolat |

Zulauf 3:

| | |
|---|---|
| 1,2 g | einer 25 gew.-%igen Ammoniaklösung |

Zulauf 4 (homogene Mischung aus):

| | |
|---|---|
| 382,9 g | entionisiertem Wasser |
| 17,3 g | einer 15 gew.-%igen wässrigen Lösung von Natriumlaurylsulfat |
| 629,2 g | n-Butylacrylat und |
| 280,8 g | Methylmethacrylat |

Nach Beendigung des Zulaufs 4 ließ man das Polymerisationsgemisch noch 90 Minuten bei 80°C nachreagieren. Dann wurde 4,6 g einer 25 gew.-%igen Ammoniaklösung zugegeben.

Anschließend wurde die erhaltene wässrige Polymerisatdispersion auf Raumtemperatur abgekühlt. Bei einer Temperatur unter 40°C wurde 130 g einer 12 gew.-%igen wässrigen Lösung von Adipinsäuredihydrazid zugegeben. Zum Schluß wurde die Dispersion über ein 125 μm Filter filtriert.

Das gewichtsmittlere Molekulargewicht des Polymerisats einer Probe, gezogen bevor Start von Zulauf 4 betrug 23,3 kDa.

Die erhaltene 3056,8 g der wässrigen Polymerisatdispersion wies einen Feststoffgehalt von 42,1 Gew.-% auf. Die MFT betrug ≤ 1°C. Die mit entionisiertem Wasser verdünnte wässrige Polymerisatdispersion einen gewichtsmittleren Teilchendurchmesser von 75 nm.

b) Anwendungstechnische Untersuchungen

Anwendungstechnische Untersuchungen wurden durchgeführt an einer Klarlackformulierung nach der unten angegeben Rezeptur:

| | | |
|---|---|---|
| **VE-Wasser** | | **80** |
| **Byk® 348** | Netzmittel der Fa. BYK-Chemie GmbH | **2** |
| **Tego Airex® 901 W** | Entschäumer der Fa. Evonik GmbH | **4** |

(fortgesetzt)

| | | | |
|---|---|---|---|
| **Solvenon® DPM**<br>**Butylglykol**<br>**Tinuvin® 1130** | Filmbildehilfsmittel der Fa. BASF SE<br>Filmbildehilfsmittel<br>Lichtschutzmittel der Fa. BASF SE | Lösemittel und Tinuvin wurde vorgemischt | **20**<br>**20**<br>**10** |
| **Tego Glide® 482** | Verlaufsadditiv der Fa. Evonik GmbH | | **3** |
| **Coapur® 830 W** | Verdicker der Fa.Coatex SAS | | **4** |
| **Coapur® XS 73** | Verdicker der Fa.Coatex SAS | | **4** |
| **Ammoniak** | Neutralisationsmittel (25%-ig) | | **2** |
| **SYLOID W® 500** | Füllstoff der Fa. W.R. Grace & Company | | **15** |
| **Dispersion** | | **40,6%** | **831** |
| **Tego Foamex® 810** | Entschäumer der Fa. Evonik GmbH | | **5** |
| **total** | | | **1000** |

Die Komponenten wurden nacheinander zugegeben und nach jedem Schritt homogen gemischt. Folgende Prüfungen wurden durchgeführt.

Lagerstabilitätstest

Die Formulierung wurde einen Lagerungstest unterworfen. Abgeschlossene 100 ml-Probenfläschchen wurden für 14 Tage bei 50 °C gelagert und auf Viskositätsanstieg geprüft. Die Krebs-Viskosität der Beschichtung wurde bei 23°C mittels eines Brookfield KU 1-Viskosimeters (in Anlehnung an ASTM D562) vor und nach 14 Tagen Lagerung bei 50°C bestimmt. Bei Viskositätsunterschieden größer 20 KU-Einheiten spricht man von nicht lagerstabilen Beschichtungen.

Naßhaftungstest der Lasur auf Kieferholz

Die zu prüfende Lasur (300 μm nass) wurde mit dem Erichsen-Filmaufziehgerät auf das Kiefernholzbrettchen appliziert. Nach einer Trocknungszeit von 7 d bei RT wurde mittels Gitterschnittprüfer und Cutter die Prüffläche vorbereitet (45° zur Holzmaßerung, 7 Schnite, 2 mm Schnittabstand). Der Gitterschnitt wurde nach EN ISO 2409 durchgeführt mit 2 mm Abstand zwischen den Schneiden. Anschließend wurden ca. 2,5 ml VE-Wasser in das Petrischälchen pipettiert und dieses auf dem zuvor angebrachten Schnittgitter für die Dauer von 2 h zentriert (Brett wurde auf die Petrischale gestellt und dann um 180° gedreht). Das Petrischälchen wurde abgenommen und das restliche VE-Wasser mit einem Tuch aufgesaugt. Nach weiteren 10 min wurde ein ca. 50 mm langer Tesatape - Streifen (45° zu allen Schnitten und in Holzmaßerungsrichtung) aufgeklebt und glattgestrichen und anschließend mit gleichmässiger Geschwindigkeit vom Probekörper gezogen.

Auswertung: Bewertung der Schadensbilder

0 = Kein Quadrat beschädigt, Schnittkanten glatt
I = Kleine Abplatzungen, < 5 % der Fläche
2 = Abplatzungen am Rand und an Schnitten, 5 - 15 %
3 = Abplatzungen an Ecken, Teilen der Quadrate, 15 - 35 %
4 = Anstrich lässt sich in langen Bändern abziehen, ganze Quadrate abgeplatzt, 35 - 65 %
5 = Abgeplatzte Fläche > 65 %

Pendelhärte der Lasur auf Glas

Die zu prüfende Lasur wurde mit einem Erichsen-Filmaufziehgerät (300 μm nass), auf einer 38 x 7 cm Glasplatte aufgerakelt. Nach 3d Trocknung bei Raumtemperatur wurde auf drei Stellen der Glasplatte drei Messwerte gependelt. Die Messung erfolgte nach König (DIN EN ISO 1522).

Tabelle 1

| Probe | FG (%) | Emulgator-Menge (pphm) | MFT (°C) | $D_w$ (nm) | Pendelhärte (s) |
|---|---|---|---|---|---|
| VB 1 | 45 | 1,45 | 13 | 82 | 24 |
| B1 | 42 | 0,25 | ≤ 0 | 70 | 27 |
| B2 | 41 | 0,30 | ≤0 | 66 | 35 |
| B3 | 41 | 0,35 | ≤1 | 62 | 45 |
| B4 | 42,8 | 0,40 | ≤1 | 59 | 36 |
| B5 | 41,7 | 0,70 | ≤1 | 64 | 34 |

Die Daten aus Tabelle 1 zeigen, dass die erfindungsgemäßen Dispersionen mit wenig Emulgator trotzdem feinteilig sind und eine niedrige Filmbildetemperatur haben. Gleichzeitig zeigen sie eine hohe Pendelhärte.

Tabelle 2

| Probe | Haftmonomer [1)] (Gew.-%) | Nasshaftung (Schulnote) |
|---|---|---|
| VB 2 | 0 | 3 |
| B 6 | 0,3 | 1 |
| B 7 | 1 | 0 |
| 1) Bezogen auf 100 Gew.-Teile der insgesamt in erster und zweiter Stufe und ggf. weiteren Stufen zu polymerisierender Monomere. | | |

Die Daten aus Tabelle 2 zeigen sehr klar den Effekt eines zusätzlichen Haftmonomeren auf die Nasshaftung der Beschichtung der entsprechenden Polymerisatdispersion.

Tabelle 3

| Probe | Methacrylsäure [1)] (Gew.-%) | Methacrylamid [1)] (Gew.-%) | pH des Holzlasurs | KU sofort | KU nach 14 T 50°C |
|---|---|---|---|---|---|
| VB 3 | 1,95 | 0 | 8,3 | 68 | nicht messbar |
| B 8 | 1,75 | 0,20 | 8,9 | 91 | 123 |
| B 9 | 1,50 | 0,45 | 9,1 | 86 | 113 |
| B 10 | 1,25 | 0,70 | 9,2 | 87 | 105 |
| B 11 | 1,00 | 0,95 | 9,3 | 88 | 100 |
| 1) Bezogen auf 100 Gew.-Teile der insgesamt in erster und zweiter Stufe und ggf. weiteren Stufen zu polymerisierender Monomere. | | | | | |

Die Daten aus Tabelle 3 zeigen deutlich den Anstieg der Viskosität nach 14 Tage Lagerung der Formulierung bei 50°C. Dieser Anstieg ist am geringsten bei Beispiel 11.

## Patentansprüche

1. Verfahren zur Herstellung von Polymerdispersionen, **dadurch gekennzeichnet, dass** man eine mindestens zweistufige Emulsionspolymerisation durchführt,

   - wobei zunächst in einer ersten Stufe in wässrigem Medium durch radikalische Emulsionspolymerisation ein in Wasser dispergiertes erstes Polymerisat mit einer Glasübergangstemperatur größer 50°C und einem gewichtsmittleren Molekulargewicht zwischen 5 und 100 kDa hergestellt wird enthaltend hydrophile und hydrophobe Monomere,

enthaltend

(A1) mindestens einen (Meth)acrylsäurealkylester,
(B1) optional mindestens einen Vinylaromaten mit bis zu 20 C-Atomen,
(C1) optional mindestens eine radikalisch polymerisierbare Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(D1) mindestens einer $\alpha,\beta$-ethylenisch ungesättigten Carbonsäure, oder ein Vinylmonomer mit latenten ionischen Gruppen,
(E1) optional mindestens einem Vernetzer,
(F1) mindestens einer Verbindung ausgewählt aus der Gruppe bestehend aus 2-Ureido(meth)acrylat, wie (Meth)-acrylsäure 2-(2-oxo-imidazolidin-1-yl)-ethyl ester, Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(G1) optional mindestens einer Verbindung mit einer (Meth)acrylat- und einer Epoxygruppe und
(H1) optional mindestens einem $\alpha,\beta$-ethylenisch ungesättigten Carbonsäureamid,

in Gegenwart mindestens eines Initiators, 0,1 bis 3,5 Gew.-% eines Emulgators bezogen auf die Gesamtmenge der in allen Stufen in die radikalische Polymerisation eindosierten radikalisch polymerisierbaren Monomere, sowie mindestens eines Kettenlängereglers,
- Neutralisation bis zu einem pH-Wert von mindestens 4,5, der so gebildeten Partikel mit einer Base (Neutralisationsmittel)
- gefolgt von einer radikalischen Polymerisation von hydrophoben und hydrophilen Monomeren in einer Folgestufe in Gegenwart des in der ersten Stufe hergestellten Copolymers von

(A2) mindestens einem (Meth)acrylsäurealkylester,
(B2) optional mindestens einem Vinylaromaten mit bis zu 20 C-Atomen,
(C2) optional mindestens einer radikalisch polymerisierbaren Verbindung ausgewählt aus der Gruppe bestehend aus ethylenisch ungesättigten Nitrilen mit bis zu 20 C-Atomen, Vinylestern von bis zu 20 C-Atome enthaltenden Carbonsäuren, Vinylhalogeniden mit bis zu 10 C-Atomen und Vinylethern von 1 bis 10 C-Atome enthaltenden Alkoholen,
(D2) optional mindestens einer $\alpha,\beta$-ethylenisch ungesättigten Carbonsäure, oder ein Vinylmonomer mit latenten ionischen Gruppen,
(E2) optional mindestens einem Vernetzer und
(F2) optional mindestens einer Verbindung ausgewählt aus der Gruppe bestehend aus 2-Ureido(meth)acrylat wie (Meth)acrylsäure 2-(2-oxo-imidazolidin-1-yl)-ethyl ester, Acetoacetoxyethyl acrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid,
(G2) optional mindestens einer Verbindung mit einer (Meth)acrylat- und einer Epoxygruppe und
(H2) optional mindestens einem $\alpha,\beta$-ethylenisch ungesättigten Carbonsäureamid, mit der Maßgabe, dass das Polymer der 2. Stufe hydrophober ist als das der 1. Stufe und die Glasübergangstemperatur der zweiten Stufe mindestens 50 °C niedriger als die der ersten Stufe ist.

2. Verfahren gemäß Anspruch 1, **dadurch gekennzeichnet, dass** im Anschluss an die Folgestufe noch mindestens ein zusätzliches Vernetzungsmittel zugegeben wird.

3. Verfahren gemäß Anspruch 2, **dadurch gekennzeichnet, dass** das Monomer (F1) und/oder (F2) ausgewählt ist aus Diacetonacrylamid (DAAM) und als Vernetzungsmittel Adipinsäuredihydrazid (ADDH).

4. Verfahren gemäß einem der Ansprüche 1 bis 3, **dadurch gekennzeichnet, dass** das Monomer (A1) und/oder (A2) ausgewählt ist aus der Gruppe bestehend aus Methylmethacrylat, Methylacrylat, Ethylacrylat, n-Butylacrylat, n-Butylmethacrylat, 2-Ethyl-hexylacrylat und 3-Propylheptylacrylat.

5. Verfahren gemäß einem der vorstehenden Ansprüche, **dadurch gekennzeichnet, dass** das Monomer (B1) und/oder (B2) ausgewählt aus der Gruppe bestehend aus Styrol und $\alpha$-Methylstyrol.

6. Verfahren gemäß einem der vorstehenden Ansprüche, **dadurch gekennzeichnet, dass** das Monomer (C1)

und/oder (C2) ausgewählt ist aus der Gruppe bestehend aus Fumarsäuredinitril, Acrylnitril und Methacrylnitril.

**7.** Verfahren gemäß einem der vorstehenden Ansprüche, **dadurch gekennzeichnet, dass** die Monomere (D1) und/oder (D2) ausgewählt sind aus der Gruppe (Meth)acrylsäure, Crotonsäure, Itaconsäure, Maleinsäure oder Fumarsäure.

**8.** Verfahren gemäß einem der vorstehenden Ansprüche, **dadurch gekennzeichnet, dass** es sich bei dem Polymerisat der ersten Stufe um ein Copolymer handelt, welches

(i) in einer Menge von 7 bis 80 Gew.%, bezogen auf 100 Gew.-Teile der insgesamt in der ersten und zweiten Stufe zu polymerisierenden Monomeren, eingesetzt wird,
(ii) zu mindestens z.B. 50 oder 60 Gew.-% und bis zu 99 Gew-% aus Hauptmonomeren aufgebaut ist, welche ausgewählt sind aus der Gruppe der Monomere A1 und B1 und
(iii) 0,1 bis 10 Gew.-% mindestens einer $\alpha,\beta$-ethylenisch ungesättigten Carbonsäure, oder Vinylmonomer mit latenten ionische Gruppen (Monomere D1),
(iv) 0,1 bis 10 Gew.-% mindestens einer Verbindung ausgewählt aus der Gruppe bestehend aus, 2-Ureido (meth)acrylat, wie (Meth)acrylsäure 2-(2-oxo-imidazolidin-1-yl)-ethyl ester, Acetoacetoxyethylacrylat, Acetoacetoxypropyl methacrylat, Acetoacetoxybutyl methacrylat, 2-(Acetoacetoxy) ethyl methacrylat, Diacetonacrylamid (DAAM) und Diacetonmethacrylamid (Monomere F1),
(v) 0 bis 10 Gew.-% mindestens einer Verbindung ausgewählt aus der Gruppe eines $\alpha,\beta$-ethylenisch ungesättigten Carbonsäureamids (Monomere H1),
(vi) 0 bis 10 Gew.-% mindestens einer Verbindung ausgewählt aus der Monomere C1, E1 und G1
wobei die Mengenangaben (ii) bis (vi) jeweils auf 100 Gew.-% der in der ersten Stufe zu polymerisierenden Monomeren bezogen sind.

**9.** Verfahren gemäß einem der vorstehenden Ansprüche, **dadurch gekennzeichnet, dass** das gewichtsmittlere Molekulargewicht des Copolymerisats der ersten Stufe zwischen 10 und 50 kDa liegt.

**10.** Verfahren gemäß einem der vorstehenden Ansprüche, **dadurch gekennzeichnet, dass** das aus der ersten Stufe erhaltene Copolymer eine Glasübergangstemperatur von 50 bis 150 °C und das aus der zweiten Stufe erhaltene Produkt eine um mindestens 50 °C niedrigere Glasübergangstemperatur aufweist.

**11.** Verfahren gemäß einem der Ansprüche 1 bis 10, **dadurch gekennzeichnet, dass** das Gewichtsverhältnis der Menge der in der ersten Stufe eingesetzten Monomere zur Menge der in der zweiten Stufe eingesetzten Monomere 10:90 bis 50:50 beträgt.

**12.** Beschichtungsmittel in Form einer wässrigen Zusammensetzung, enthaltend wenigstens eine nach dem Verfahren gemäß einem der Ansprüche 1 bis 11 hergestellte Polymerisatdispersion, ,

- gegebenenfalls wenigstens einen (an)organischen Füllstoff und/oder wenigstens ein (an)organisches Pigment,
- gegebenenfalls wenigstens ein übliches Hilfsmittel, und
- Wasser.

**13.** Verwendung von einer gemäß den Ansprüchen 1 bis 11 hergestellten Polymerisatdispersione für Beschichtungsmassen.

**14.** Verwendung von einer gemäß den Ansprüchen 1 bis 11 hergestellten Polymerisatdispersion für Anstrichmittel.

**15.** Verwendung von einer gemäß den Ansprüchen 1 bis 11 hergestellten Polymerisatdispersion als Anstrichmittel für Holzbeschichtungen.

## Claims

**1.** A process for preparing a polymer dispersion, which comprises
carrying out an at least two-stage emulsion polymerization,

- where first in a first stage in aqueous medium a first polymer in dispersion in water and having a glass transition

temperature of more than 50°C and a weight-average molecular weight of between 5 and 100 kDa is prepared by free-radical emulsion polymerization, comprising hydrophilic and hydrophobic monomers, comprising

(A1) at least one (meth)acrylic acid alkyl ester,
(B1) optionally at least one vinylaromatic having up to 20 C atoms,
(C1) optionally at least one free-radically polymerizable compound selected from the group consisting of ethylenically unsaturated nitriles having up to 20 C atoms, vinyl esters of carboxylic acids comprising up to 20 C atoms, vinyl halides having up to 10 C atoms, and vinyl ethers of alcohols containing 1 to 10 C atoms,
(D1) at least one $\alpha,\beta$-ethylenically unsaturated carboxylic acid, or a vinyl monomer with latent ionic groups,
(E1) optionally at least one crosslinker,
(F1) at least one compound selected from the group consisting of 2-ureido(meth)acrylate, such as 2-(2-oxoimidazolidin-1-yl)ethyl (meth)acrylate, acetoacetoxyethyl acrylate, acetoacetoxypropyl methacrylate, acetoacetoxybutyl methacrylate, 2-(acetoacetoxy)ethyl methacrylate, diacetoneacrylamide (DAAM), and diacetonemethacrylamide,
(G1) optionally at least one compound having a (meth)acrylate group and an epoxy group, and
(H1) optionally at least one $\alpha,\beta$-ethylenically unsaturated carboxamide,
in the presence of at least one initiator, 0.1 to 3.5% by weight of an emulsifier, based on the total amount of the free-radically polymerizable monomers introduced into the free-radical polymerization in all stages, and at least one chain transfer agent,

- neutralization to a pH of at least 4.5 of the particles thus formed, using a base (neutralizing agent),
- followed by free-radical polymerization of hydrophobic and hydrophilic monomers in a following stage, in the presence of the copolymer prepared in the first stage, from

(A2) at least one (meth)acrylic acid alkyl ester,
(B2) optionally at least one vinylaromatic having up to 20 C atoms,
(C2) optionally at least one free-radically polymerizable compound selected from the group consisting of ethylenically unsaturated nitriles having up to 20 C atoms, vinyl esters of carboxylic acids comprising up to 20 C atoms, vinyl halides having up to 10 C atoms, and vinyl ethers of alcohols containing 1 to 10 C atoms,
(D2) optionally at least one $\alpha,\beta$-ethylenically unsaturated carboxylic acid, or a vinyl monomer with latent ionic groups,
(E2) optionally at least one crosslinker, and
(F2) optionally at least one compound selected from the group consisting of 2-ureido(meth)acrylate, such as 2-(2-oxoimidazolidin-1-yl)ethyl (meth)acrylate, acetoacetoxyethyl acrylate, acetoacetoxypropyl methacrylate, acetoacetoxybutyl methacrylate, 2-(acetoacetoxy)ethyl methacrylate, diacetoneacrylamide (DAAM), and diacetonemethacrylamide,
(G2) optionally at least one compound having a (meth)acrylate group and an epoxy group, and
(H2) optionally at least one $\alpha,\beta$-ethylenically unsaturated carboxamide, with the proviso that the polymer of the 2nd stage is more hydrophobic than that of the 1st stage, and the glass transition temperature of the second stage is at least 50°C lower than that of the first stage.

**2.** The process according to claim 1, wherein the following stage is followed by further addition of at least one additional crosslinking agent.

**3.** The process according to claim 2, wherein the monomer (F1) and/or (F2) is selected from diacetoneacrylamide (DAAM) and as crosslinking agent adipic dihydrazide (ADDH).

**4.** The process according to any of claims 1 to 3, wherein the monomer (A1) and/or (A2) is selected from the group consisting of methyl methacrylate, methyl acrylate, ethyl acrylate, n-butyl acrylate, n-butyl methacrylate, 2-ethylhexyl acrylate, and 3-propylheptyl acrylate.

**5.** The process according to any of the preceding claims, wherein the monomer (B1) and/or (B2) is selected from the group consisting of styrene and $\alpha$-methylstyrene.

**6.** The process according to any of the preceding claims, wherein the monomer (C1) and/or (C2) is selected from the group consisting of fumaronitrile, acrylonitrile, and methacrylonitrile.

7. The process according to any of the preceding claims, wherein the monomers (D1) and/or (D2) are selected from the group of (meth)acrylic acid, crotonic acid, itaconic acid, maleic acid or fumaric acid.

8. The process according to any of the preceding claims, wherein the polymer of the first stage is a copolymer

(i) which is used in an amount of 7% to 80% by weight, based on 100 parts by
weight of the total monomers for polymerization in the first and second stages,
(ii) which is synthesized to an extent of at least, e.g., 50% or 60% by weight and up to 99% by weight of principal monomers which are selected from the group of the monomers A1 and B1 and
(iii) 0.1% to 10% by weight of at least one α,β-ethylenically unsaturated carboxylic acid, or vinyl monomer with latent ionic groups (monomers D1),
(iv) 0.1% to 10% by weight of at least one compound selected from the group consisting of 2-ureido(meth)acrylate, such as 2-(2-oxoimidazolidin-1-yl)ethyl (meth)acrylate, acetoacetoxyethyl acrylate, acetoacetoxypropyl methacrylate, acetoacetoxybutyl methacrylate, 2-(acetoacetoxy)ethyl methacrylate, diacetoneacrylamide (DAAM) and diacetonemethacrylamide (monomers F1),
(v) 0% to 10% by weight of at least one compound selected from the group of an α,β-ethylenically unsaturated carboxamide (monomers H1),
(vi) 0% to 10% by weight of at least one compound selected from the monomers C1, E1, and G1,

the quantity figures (ii) to (vi) being based in each case on 100% by weight of the monomers for polymerization in the first stage.

9. The process according to any of the preceding claims, wherein the weight-average molecular weight of the copolymer of the first stage is between 10 and 50 kDa.

10. The process according to any of the preceding claims, wherein the copolymer obtained from the first stage has a glass transition temperature of 50 to 150°C and the product obtained from the second stage has a glass transition temperature which is lower by at least 50°C.

11. The process according to any of claims 1 to 10, wherein the weight ratio of the monomers used in the first stage to the amount of the monomers used in the second stage is 10:90 to 50:50.

12. A coating material in the form of an aqueous composition comprising at least one polymer dispersion prepared according to the process according to any of claims 1 to 11,

- optionally at least one (in)organic filler and/or at least one (in)organic pigment,
- optionally at least one customary auxiliary, and
- water.

13. The use of a polymer dispersion prepared according to any of claims 1 to 11 for coating compositions.

14. The use of a polymer dispersion prepared according to any of claims 1 to 11 for paints.

15. The use of a polymer dispersion prepared according to any of claims 1 to 11 as paints for wood coatings.

**Revendications**

1. Procédé de fabrication de dispersions de polymère, **caractérisé en ce que** une polymérisation en émulsion au moins à deux étapes est réalisée,

- lors d'une première étape en milieu aqueux par polymérisation en émulsion radicalaire, un premier polymère dispersé dans de l'eau ayant une température de transition vitreuse supérieure à 50 °C et un poids moléculaire moyen en poids compris entre 5 et 100 kDa étant tout d'abord fabriqué, contenant des monomères hydrophiles et hydrophobes,

contenant :

(A1) au moins un ester alkylique de l'acide (méth)acrylique,
(B1) éventuellement au moins un composé aromatique de vinyle contenant jusqu'à 20 atomes C,
(C1) éventuellement au moins un composé polymérisable par voie radicalaire choisi dans le groupe constitué par les nitriles éthyléniquement insaturés contenant jusqu'à 20 atomes C, les esters de vinyle d'acides carboxyliques contenant jusqu'à 20 atomes C, les halogénures de vinyle contenant jusqu'à 10 atomes C et les éthers de vinyle d'alcools contenant de 1 à 10 atomes C,
(D1) au moins un acide carboxylique α,β-éthyléniquement insaturé, ou un monomère de vinyle contenant des groupes ioniques latents,
(E1) éventuellement au moins un agent de réticulation,
(F1) au moins un composé choisi dans le groupe constitué par le 2-uréido(méth)acrylate, tel que l'ester 2-(2-oxo-imidazolidin-1-yl)-éthylique de l'acide (méth)acrylique, l'acrylate d'acétoacétoxyéthyle, le méthacrylate d'acétoacétoxypropyle, le méthacrylate d'acétoacétoxybutyle, le méthacrylate de 2-(acétoacétoxy)-éthyle, le diacétone-acrylamide (DAAM) et le diacétone-méthacrylamide,
(G1) éventuellement au moins un composé contenant un groupe (méth)acrylate et un groupe époxy, et
(H1) éventuellement au moins un amide d'acide carboxylique α,β-éthyléniquement insaturé,
en présence d'au moins un initiateur, 0,1 à 3,5 % en poids d'un émulsifiant, par rapport à la quantité totale des monomères polymérisables par voie radicalaire introduits dans toutes les étapes de la polymérisation radicalaire, ainsi que d'au moins un régulateur de la longueur de chaîne,

- la neutralisation jusqu'à un pH d'au moins 4,5 des particules ainsi formées avec une base (agent de neutralisation),
- suivie par une polymérisation radicalaire de monomères hydrophobes et hydrophiles lors d'une étape ultérieure en présence du copolymère fabriqué lors de la première étape de

(A2) au moins un ester alkylique de l'acide (méth)acrylique,
(B2) éventuellement au moins un composé aromatique de vinyle contenant jusqu'à 20 atomes C,
(C2) éventuellement au moins un composé polymérisable par voie radicalaire choisi dans le groupe constitué par les nitriles éthyléniquement insaturés contenant jusqu'à 20 atomes C, les esters de vinyle d'acides carboxyliques contenant jusqu'à 20 atomes C, les halogénures de vinyle contenant jusqu'à 10 atomes C et les éthers de vinyle d'alcools contenant de 1 à 10 atomes C,
(D2) éventuellement au moins un acide carboxylique α,β-éthyléniquement insaturé, ou un monomère vinylique contenant des groupes ioniques latents,
(E2) éventuellement au moins un agent de réticulation, et
(F2) éventuellement au moins un composé choisi dans le groupe constitué par le 2-uréido(méth)acrylate, tel que l'ester 2-(2-oxo-imidazolidin-1-yl)-éthylique de l'acide (méth)acrylique, l'acrylate d'acétoacétoxyéthyle, le méthacrylate d'acétoacétoxypropyle, le méthacrylate d'acétoacétoxybutyle, le méthacrylate de 2-(acétoacétoxy)-éthyle, le diacétone-acrylamide (DAAM) et le diacétone-méthacrylamide,
(G2) éventuellement au moins un composé contenant un groupe (méth)acrylate et un groupe époxy, et
(H2) éventuellement au moins un amide d'acide carboxylique α,β-éthyléniquement insaturé,
à condition que le polymère de la 2$^{e}$ étape soit plus hydrophobe que celui de la 1$^{e}$ étape, et que la température de transition vitreuse de la deuxième étape soit inférieure d'au moins 50 °C à celle de la première étape.

2. Procédé selon la revendication 1, **caractérisé en ce qu'**au moins un agent de réticulation supplémentaire est encore ajouté après l'étape ultérieure.

3. Procédé selon la revendication 2, **caractérisé en ce que** les monomères (F1) et/ou (F2) sont choisis parmi le diacétone-acrylamide (DAAM) et en tant qu'agent de réticulation, le dihydrazide de l'acide adipique (ADDH).

4. Procédé selon l'une quelconque des revendications 1 à 3, **caractérisé en ce que** les monomères (A1) et/ou (A2) sont choisis dans le groupe constitué par le méthacrylate de méthyle, l'acrylate de méthyle, l'acrylate d'éthyle, l'acrylate de n-butyle, le méthacrylate de n-butyle, l'acrylate de 2-éthylhexyle et l'acrylate de 3-propylheptyle.

5. Procédé selon l'une quelconque des revendications précédentes, **caractérisé en ce que** les monomères (B1) et/ou (B2) sont choisis dans le groupe constitué par le styrène et l'α-méthylstyrène.

6. Procédé selon l'une quelconque des revendications précédentes, **caractérisé en ce que** les monomères (C1) et/ou (C2) sont choisis dans le groupe constitué par le dinitrile de l'acide fumarique, l'acrylonitrile et le méthacrylonitrile.

7. Procédé selon l'une quelconque des revendications précédentes, **caractérisé en ce que** les monomères (D1) et/ou (D2) sont choisis dans le groupe constitué par l'acide (méth)acrylique, l'acide crotonique, l'acide itaconique, l'acide maléique ou l'acide fumarique.

8. Procédé selon l'une quelconque des revendications précédentes, **caractérisé en ce que** le polymère de la première étape est un copolymère, qui

    (i) est utilisé en une quantité de 7 à 80 % en poids, par rapport à 100 parties en poids des monomères à polymériser au total dans la première et la deuxième étape,
    (ii) est formé par au moins p. ex. 50 ou 60 % en poids et jusqu'à 99 % en poids de monomères principaux, qui sont choisis dans le groupe constitué par les monomères A1 et B1, et
    (iii) 0,1 à 10 % en poids d'au moins un acide carboxylique α,β-éthyléniquement insaturé, ou d'un monomère de vinyle contenant des groupes ioniques latents (monomères D1),
    (iv) 0,1 à 10 % en poids d'au moins un composé choisi dans le groupe constitué par le 2-uréido(méth)acrylate, tel que l'ester 2-(2-oxo-imidazolidin-1-yl)-éthylique de l'acide (méth)acrylique, l'acrylate d'acétoacétoxyéthyle, le méthacrylate d'acétoacétoxypropyle, le méthacrylate d'acétoacétoxybutyle, le méthacrylate de 2-(acétoacétoxy)-éthyle, le diacétone-acrylamide (DAAM) et le diacétone-méthacrylamide (monomères F1),
    (v) 0 à 10 % en poids d'au moins un composé choisi dans le groupe constitué par un amide d'acide carboxylique α,β-éthyléniquement insaturé (monomères H1),
    (vi) 0 à 10 % en poids d'au moins un composé choisi parmi les monomères C1, E1 et G1,

    les indications de quantités de (ii) à (vi) se rapportant à chaque fois à 100 % en poids des monomères à polymériser dans la première étape.

9. Procédé selon l'une quelconque des revendications précédentes, **caractérisé en ce que** le poids moléculaire moyen en poids du copolymère de la première étape est compris entre 10 et 50 kDa.

10. Procédé selon l'une quelconque des revendications précédentes, **caractérisé en ce que** le copolymère obtenu à la première étape présente une température de transition vitreuse de 50 à 150 °C et le produit obtenu à la deuxième étape présente une température de transition vitreuse inférieure d'au moins 50 °C.

11. Procédé selon l'une quelconque des revendications 1 à 10, **caractérisé en ce que** le rapport en poids entre la quantité des monomères utilisés lors de la première étape et la quantité des monomères utilisés lors de la deuxième étape est de 10:90 à 50:50.

12. Agent de revêtement sous la forme d'une composition aqueuse, contenant au moins une dispersion de polymère fabriquée par le procédé selon l'une quelconque des revendications 1 à 11,

    - éventuellement au moins une charge (in)organique et/ou au moins un pigment (in)organique,
    - éventuellement au moins un adjuvant usuel et
    - de l'eau.

13. Utilisation d'une dispersion de polymère fabriquée selon les revendications 1 à 11 pour des matériaux de revêtement.

14. Utilisation d'une dispersion de polymère fabriquée selon les revendications 1 à 11 pour des peintures.

15. Utilisation d'une dispersion de polymère fabriquée selon les revendications 1 à 11 en tant que peinture pour des revêtements de bois.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0710680 B
- DE 19609509 A
- EP 690882 A
- EP 710680 A
- EP 1125949 A
- EP 1294816 A
- EP 1614732 A
- WO 0329300 A
- AT 402504
- WO 2011009838 A
- US 5962571 A
- EP 1167477 A
- EP 338486 A
- US 5081166 A
- EP 758347 A
- EP 989163 A
- EP 1978044 A
- US 20080058473 A1
- WO 05121595 A
- WO 9925780 A
- US 4733005 A
- EP 0789724 A
- US 4269749 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- **VAN KREVELEN.** Properties of Polymers. Elsevier Scientific Publishing Company, 1990
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Methoden der organischen Chemie. **HOUBEN-WEYL.** Makromolekulare Stoffe. Georg Thieme Verlag, 1961, vol. XIV/1, 411-420
- Methoden der organischen Chemie. **HOUBEN-WEYL.** Makromolekulare Stoffe. Georg Thieme Verlag, 1961, vol. 14/1, 192-208
- Methoden der organischen Chemie. **HOUBEN-WEYL.** Makromolekulare Stoffe. Georg-Thieme-Verlag, 1961, vol. XIV/1, 192-208
- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175
- Ullmanns Enzyklopädie der technischen Chemie. Verlag Chemie, 1980, vol. 19, 17